# EUROPEAN PATENT APPLICATION

(11) **EP 4 702 837 A1**
(43) Date of publication of application: **04.03.2026**
(21) Application number: 24797169.0
(22) Date of filing: 26.04.2024
(51) Int. Cl.: A01K 29/00, G01N 33/68

(54) **METHOD FOR EVALUATING METABOLIC DISEASE FOLLOWING CALVING**

(30) Priority: 28.04.2023 JP 2023074785
(71) Applicant: AJINOMOTO CO., INC., Chuo-ku Tokyo 104-8315 (JP)
(72) Inventor: IMAIZUMI, Akira, Kawasaki-shi, Kanagawa 210-8681 (JP); SUGIMOTO, Yusuke, Kawasaki-shi, Kanagawa 210-8681 (JP); HARUNO, Atsushi, Kawasaki-shi, Kanagawa 210-8681 (JP); NAKAGAWA, Kazuki, Kawasaki-shi, Kanagawa 210-8681 (JP); NATSUME, Manami, Kawasaki-shi, Kanagawa 210-8681 (JP)
(74) Representative: Mewburn Ellis LLP
(86) International application number: PCT/JP2024/016392
(87) International publication number: WO 2024/225424

(57) **Abstract**

Provided are an evaluating method and the like by which a state of a metabolic disease after present parturition can be evaluated before present parturition without using blood data. In the present embodiment, a first evaluation of evaluating a state of a metabolic disease in a cow after present parturition is performed using a first value in the cow before present parturition, a value of a formula calculated using the first value and the formula including an explanatory variable to be substituted with the first value, or a graph generated based on the first value, the first value being a value on cattle management information obtainable by a non-invasive method.

## Description

### TECHNICAL FIELD

The present invention relates to an evaluating method, a calculating method, an evaluating apparatus, a calculating apparatus, an evaluating program, a calculating program, a recording medium, an evaluating system, a terminal apparatus, and a formula generating method.

### BACKGROUND ART

The period called the perinatal period of three weeks after parturition is a critical period for a cow. In the period, metabolic diseases, for example, ketosis, milk fever, placental retention, abomasum displacement, metritis, hoof disease, and mastitis, are often developed.

For example, ketosis is a critical disease for which relevance to the reduction of reproductive performance and milk production has been reported (Nonpatent Literature 1). The definitive diagnosis of ketosis is given based on the blood concentration of β-hydroxy butyric acid (BHBA). A case where the blood concentration of BHBA after parturition is 3000 µmol/l or more is diagnosed as clinical ketosis, and a case where the blood concentration of BHBA after parturition is 1200 µmol/l or more is diagnosed as subclinical ketosis. In the recent years, treatments for subclinical ketosis that shows no obvious symptom but has the blood concentration of BHBA being high to some extent has been paid attention, in addition to the clinical ketosis diagnosed as ketosis clearly by clinical symptom. It is because, conventionally, subclinical ketosis has not been subjected to treatment, but on the other hand, subclinical ketosis has a large impact on the reduction of milk production and reproductive performance.

Simple measurement kits for BHBA capable of performing simple measurement of the blood concentration of BHBA after parturition have been developed for the purpose of definitively diagnosing ketosis and curing the disease, and are used in farms.

Some reports on techniques for diagnosing the risk of ketosis are available. For example, the possibility of diagnosing ketosis in postpartum dairy cows based on the blood concentration of non esterified fatty acid (NEFA) before parturition has been reported (Nonpatent Literature 2). In addition, metabolic profiling has been proposed to offer normal ranges of indicators in blood for each period from the dry period to the late lactation period and extract an individual deviated from the normal range as a cow with ketosis risk (Nonpatent Literature 3).

Milk fever, or parturient hypocalcemia, is a metabolic disease in which large amounts of calcium are released into the milk after parturition, resulting in low blood calcium concentrations and inability to contract muscles, making it impossible to stand. The definitive diagnosis of this disease is made by measuring the blood concentration of calcium, but no diagnosis methods for quick action at the onset of the disease have been established, and the diagnosis has been done visually or by palpation. No methods for diagnosing the risk of the disease have been disclosed.

Placental retention can cause abnormal bleeding when the placenta remains in the uterus without detaching after the calf is delivered. Regarding the possible risk of placental retention, Japanese Patent No. 5710180 discloses a method of predicting its development using the blood concentration of estradiol 17β as a marker.

Abomasum displacement, which often develops within a month after parturition due to obesity and insufficient dry matter intake at parturition, impairs food digestion and also presents symptoms of obstruction. For the abomasum displacement, blood concentrations of GOT, NEFA, 3-hydroxy butyric acid, and glucose on the day after parturition, body condition score (BCS) before parturition, days open in the previous parity, number of inseminations, and dry period are known risk factors.

A known technique for predicting the risk of mastitis is to estimate the risk of developing mastitis in a parous cow based on the prepartum milk properties and the results of the CMT method.

As a method for evaluating the risk of dysmetabolic diseases, for example, International Publication WO 2018/003638 that is an international application by the present applicant discloses a method of evaluating postpartum ketosis risk using prepartum blood amino acid profiling of dairy cows. Chinese Patent Application Publication No. 114373505 discloses a model that predicts the concentration of β-hydroxy butyric acid, which is a known marker of postpartum ketosis morbidity, from the bacterial flora in the gut before parturition. Alternatively, Japanese Patent No. 5710180 above discloses a method of predicting the onset of placental retention using the blood concentration of estradiol 17β as a marker. However, sampling from cows before parturition has been invasive in any case.

As used herein, the invasive method is a physically demanding method. For example, inserting a needle into a cow's body to collect blood is an invasive method.

International Publication WO 2021/221249 discloses an artificial intelligence-based livestock management method using non-invasive samples, in which body temperature information obtained by photographing livestock with an image camera and a thermal imaging camera and environmental information of barns are used as explanatory variables, an abnormal condition of livestock is used as an objective variable, and a deep learning model is created to predict symptoms of diseases and their infection routes as one of abnormal signs of livestock. However, no model for predicting specific diseases is disclosed. For example, no method for evaluating the risk of metabolic diseases is disclosed.
Nonpatent Literature 1: T. F. Duffield, K. D. Lissemore, B. W. McBride, and K. E. Leslie, Impact of hyperketonemia in early lactation dairy cows on health and production. J. Dairy. Sci. 92: 571-580 (2009)
Nonpatent Literature 2: P. A. Ospina, D. V. Nydam, T. Stokol, and T. R. Overton, Evaluation of nonesterified fatty acids and β-hydroxybutyrate in transition dairy cattle in the northeastern United States: Clinicalthresholds for prediction of clinical diseases. J. Dairy. Sci. 93: 546-554 (2010)
Nonpatent Literature 3: K. Kida, The metabolic profile test: Its practicability in assessing feeding management and periparturient diseases in high yielding commercial dairy herds. J. Vet. Med. Sci. 64: 557-563 (2002)

### DISCLOSURE OF INVENTION

### PROBLEM TO BE SOLVED BY THE INVENTION

If it is possible that the risk of developing ketosis after parturition be diagnosed in advance before parturition, for example, prophylactic nutritional intervention before parturition is considered to be able to reduce the development of ketosis and thereby contribute to efficient production for dairy farmers. Furthermore, if this diagnosis can be made without using blood data from cows, it is possible to save dairy farmers the trouble of collecting blood samples from each cow.

As for the prepartum diagnosis of the risk of developing ketosis after parturition, however, the problem is that there is no technique actually used in farms for diagnosing the risk. Another problem is that there is no technique to make such diagnosis without using blood data from cows (i.e., non-invasively).

It should be noted that the above-mentioned kits have been developed for the purpose of definitively diagnosing ketosis and curing the disease, and therefore, the kits cannot be used for recognizing the risk of developing ketosis after parturition in advance before parturition. Furthermore, if the above-mentioned kits are used for the purpose of the recognition, reliable results cannot be obtained.

In view of the above, it is an object of the present invention to provide an evaluating method and the like by which the state of metabolic diseases after present parturition can be evaluated before present parturition without using blood data.

### MEANS FOR SOLVING PROBLEM

To solve the problem and achieve the object, an evaluating method according to one aspect of the present invention includes an evaluating step of performing a first evaluation of evaluating a state of a metabolic disease in a cow after present parturition, using (i) a first value in the cow before present parturition, (ii) a value of a formula calculated using the first value and the formula including an explanatory variable to be substituted with the first value, or (iii) a graph generated based on the first value, the first value being a value on cattle management information obtainable by a non-invasive method.

In the evaluating method according to another aspect of the present invention, the first value may be at least one of foraging time, rumination time, metabolizable protein sufficiency rate (MP sufficiency rate), metabolizable energy sufficiency rate (ME sufficiency rate), dry matter intake sufficiency rate (DMI sufficiency rate), milking volume, milk yield sufficiency rate, and days since last parturition.

In the evaluating method according to still another aspect of the present invention, the cow may be a dairy cow or a beef cow.

In the evaluating method according to still another aspect of the present invention, the first value may be a value in a predetermined lactation period.

In the evaluating method according to still another aspect of the present invention, the first value may be at least one of a parity number and a total number of milking days of a cow before present parturition.

In the evaluating method according to still another aspect of the present invention, the first value may further have an attribute of at least one of a parity number and a total number of milking days of a cow before present parturition.

In the evaluating method according to still another aspect of the present invention, the first value may be at least one of mean and standard deviation.

In the evaluating method according to still another aspect of the present invention, in the first evaluation, at least one of (i) whether the cow has the metabolic disease after present parturition, and (ii) whether the cow does not have the metabolic disease after present parturition but needs to be examined may be evaluated.

In the evaluating method according to still another aspect of the present invention, the state of the metabolic disease may be a state of a metabolic disease at a predetermined time point after present parturition.

In the evaluating method according to still another aspect of the present invention, the metabolic disease may be subclinical ketosis, clinical ketosis, metritis, placental retention, abomasum displacement, milk fever, acidosis, hoof disease, or mastitis.

In the evaluating method according to still another aspect of the present invention, at the evaluating step, the first evaluation may be performed using an image of the graph generated by plotting the days since last parturition on one axis and the milking volume on another axis.

In the evaluating method according to still another aspect of the present invention, at the evaluating step, a second evaluation of evaluating the state of the metabolic disease in the cow after present parturition may be further performed, using (i) a second value or (ii) a value of a formula calculated using the second value and the formula including an explanatory variable to be substituted with the second value, the second value being a concentration value of an amino acid in blood of the cow before present parturition.

In the evaluating method according to still another aspect of the present invention, at the evaluating step, following the second evaluation, a third evaluation of evaluating the state of the metabolic disease in the cow after present parturition may be further performed, using (i) a third value, or (ii) a value of a formula calculated using the third value and the formula including an explanatory variable to be substituted with the third value, or (iii) a graph generated based on the third value, the third value being a value on cattle management information obtainable by a non-invasive method.

The evaluating method according to still another aspect of the present invention may further include a proposing step of proposing a prophylactic measure for a cow evaluated at the evaluating step as having a high possibility of suffering from the metabolic disease after parturition.

In the evaluating method according to still another aspect of the present invention, the prophylactic measure may be at least one selected from the group consisting of administration of rumen-protected amino acids, administration of a feed additive, administration of a drug, and veterinary diagnosis.

In the evaluating method according to still another aspect of the present invention, the feed additive may be at least one selected from the group consisting of PH adjusters, ion balance adjusters, mycotoxin adsorbents, propionate analogs such as calcium propionate, vitamins, minerals, amino acids, fatty acids, urea, probiotics, yeasts, enzymes, antibiotics, antioxidants, antibacterial agents, and organic acids.

In the evaluating method according to still another aspect of the present invention, at the proposing step, statistical causal inference may be performed to infer a cause of disease for a cow evaluated as having a possibility of suffering from the metabolic disease, and a prophylactic measure corresponding to the cause may be proposed.

In the evaluating method according to still another aspect of the present invention, the evaluating step and the proposing step may be executed in a control unit of an information processing apparatus including the control unit.

A calculating method according to one aspect of the present invention includes a calculating step of calculating a value of a formula for evaluating a state of a metabolic disease in a cow after present parturition, using (i) a first value in the cow before present parturition and (ii) the formula including an explanatory variable to be substituted with the first value, the first value being a value on cattle management information obtainable by a non-invasive method.

In the calculating method according to another aspect of the present invention, the calculating step may be executed in a control unit of an information processing apparatus including the control unit.

An evaluating apparatus according to one aspect of the present invention is an evaluating apparatus including a control unit. The control unit includes an evaluating unit that performs a first evaluation of evaluating a state of a metabolic disease in a cow after present parturition, using (i) a first value in the cow before present parturition, (ii) a value of a formula calculated using the first value and the formula including an explanatory variable to be substituted with the first value, or (iii) a graph generated based on the first value, the first value being a value on cattle management information obtainable by a non-invasive method.

In the evaluating apparatus according to another aspect of the present invention, the evaluating apparatus may be communicably connected via a network to a terminal apparatus that provides the first value, the value of the formula, or the graph. The control unit may further include a data receiving unit that receives the first value, the value of the formula, or the graph transmitted from the terminal apparatus, and a result sending unit that transmits an evaluation result obtained by the evaluating unit to the terminal apparatus. The evaluating unit may use the first value, the value of the formula, or the graph received by the data receiving unit.

A calculating apparatus according to one aspect of the present invention is a calculating apparatus including a control unit. The control unit includes a calculating unit that calculates a value of a formula for evaluating a state of a metabolic disease in a cow after present parturition, using (i) a first value in the cow before present parturition and (ii) the formula including an explanatory variable to be substituted with the first value, the first value being a value on cattle management information obtainable by a non-invasive method.

An evaluating program according to one aspect of the present invention is an evaluating program including programmed instructions for causing an information processing apparatus including a control unit to execute an evaluating method. The evaluating method includes an evaluating step of performing a first evaluation of evaluating a state of a metabolic disease in a cow after present parturition, using (i) a first value in the cow before present parturition, (ii) a value of a formula calculated using the first value and the formula including an explanatory variable to be substituted with the first value, or (iii) a graph generated based on the first value, the first value being a value on cattle management information obtainable by a non-invasive method.

A calculating program according to one aspect of the present invention is a calculating program including programmed instructions for causing an information processing apparatus including a control unit to execute a calculating method. The calculating method includes a calculating step of calculating a value of a formula for evaluating a state of a metabolic disease in a cow after present parturition, using (i) a first value in the cow before present parturition and (ii) the formula including an explanatory variable to be substituted with the first value, the first value being a value on cattle management information obtainable by a non-invasive method.

A recording medium according to one aspect of the present invention is a computer-readable recording medium that stores the evaluating program or the calculating program. Specifically, the recording medium according to one aspect of the present invention is a non-transitory tangible computer-readable recording medium including the programmed instructions for causing an information processing apparatus to execute the evaluating method or the calculating method.

An evaluating system according to one aspect of the present invention is an evaluating system including an evaluating apparatus including a control unit and a terminal apparatus including a control unit that are connected to each other communicatively via a network. The control unit of the terminal apparatus includes (I) a data sending unit that transmits, to the evaluating apparatus, (i) a first value in a cow before present parturition, (ii) a value of a formula calculated using the first value and the formula including an explanatory variable to be substituted with the first value, or (iii) a graph generated based on the first value, the first value being a value on cattle management information obtainable by a non-invasive method, and (II) a result receiving unit that receives an evaluation result on a state of a metabolic disease in the cow after present parturition transmitted from the evaluating apparatus. The control unit of the evaluating apparatus includes (I) a data receiving unit that receives the first value, the value of the formula, or the graph transmitted from the terminal apparatus, (II) an evaluating unit that evaluates the state of the metabolic disease in the cow after present parturition, using the first value, the value of the formula, or the graph received by the data receiving unit, and (III) a result sending unit that transmits the evaluation result obtained by the evaluating unit to the terminal apparatus.

A terminal apparatus according to one aspect of the present invention is a terminal apparatus including a control unit. The control unit includes a result obtaining unit that obtains an evaluation result on a state of a metabolic disease in a cow after present parturition. The evaluation result is a result of evaluating the state of the metabolic disease in the cow after present parturition, using (i) a first value in the cow before present parturition, (ii) a value of a formula calculated using the first value and the formula including an explanatory variable to be substituted with the first value, or (iii) a graph generated based on the first value, the first value being a value on cattle management information obtainable by a non-invasive method.

The terminal apparatus according to another aspect of the present invention may be communicatively connected via a network to an evaluating apparatus that performs the evaluation. The result obtaining unit may receive the result transmitted from the evaluating apparatus.

A formula generating method according to one aspect of the present invention includes a formula generating step of (i) obtaining a first value in a cow before present parturition, the first value being a value on cattle management information obtainable by a non-invasive method, (ii) obtaining a state of a metabolic disease in the cow after present parturition, and (iii) generating a formula for evaluating, before present parturition, the state of the metabolic disease in the cow after present parturition, by a predetermined analytical method, using the obtained first value and the obtained state of the metabolic disease in the cow after present parturition as training data.

In the formula generating method according to another aspect of the present invention, the first value may be at least one of foraging time, rumination time, metabolizable protein sufficiency rate (MP sufficiency rate), metabolizable energy sufficiency rate (ME sufficiency rate), dry matter intake sufficiency rate (DMI sufficiency rate), milking volume, milk yield sufficiency rate, and days since last parturition.

In the formula generating method according to still another aspect of the present invention, the cow may be a dairy cow or a beef cow.

In the formula generating method according to still another aspect of the present invention, the first value may be a value in a predetermined lactation period.

In the formula generating method according to still another aspect of the present invention, the first value may be at least one of a parity number and a total number of milking days of a cow before present parturition.

In the formula generating method according to still another aspect of the present invention, the first value may further have an attribute of at least one of a parity number and a total number of milking days of a cow before present parturition.

In the formula generating method according to still another aspect of the present invention, the first value may be at least one of mean and standard deviation.

In the formula generating method according to still another aspect of the present invention, the state of the metabolic disease in the cow after present parturition may be (i) whether the cow has the metabolic disease after present parturition, or (ii) whether the cow does not have the metabolic disease after present parturition but needs to be examined.

In the formula generating method according to still another aspect of the present invention, the state of the metabolic disease may be a state of a metabolic disease at a predetermined time point after present parturition.

In the formula generating method according to still another aspect of the present invention, the metabolic disease may be subclinical ketosis, clinical ketosis, metritis, placental retention, abomasum displacement, milk fever, acidosis, hoof disease, or mastitis.

In the formula generating method according to still another aspect of the present invention, the predetermined analytical method may be at least one analytical method selected from the group consisting of decision trees, random forests, neural networks, and logistic regression.

### EFFECT OF THE INVENTION

According to the present invention, a state of a metabolic disease after present parturition can be evaluated before present parturition without using blood data.

### BRIEF DESCRIPTION OF DRAWINGS

FIG. 1 is a principle configurational diagram showing a basic principle of a first embodiment;
FIG. 2 is a principle configurational diagram showing a basic principle of a second embodiment;
FIG. 3 is a diagram showing an example of an entire configuration of a present system;
FIG. 4 is a diagram showing another example of an entire configuration of the present system;
FIG. 5 is a block diagram showing an example of a configuration of an evaluating apparatus 100 in the present system;
FIG. 6 is a chart showing an example of information stored in a non-blood data file 106a;
FIG. 7 is a chart showing an example of information stored in a BHBA state information file 106b;
FIG. 8 is a chart showing an example of information stored in a designated BHBA state information file 106c;
FIG. 9 is a chart showing an example of information stored in a formula file 106d1;
FIG. 10 is a chart showing an example of information stored in an evaluation result file 106e;
FIG. 11 is a block diagram showing a configuration of an evaluating part 102d;
FIG. 12 is a block diagram showing an example of a configuration of a client apparatus 200 in the present system;
FIG. 13 is a block diagram showing an example of a configuration of a database apparatus 400 in the present system;
FIG. 14 is a chart showing a time series of verification per parity cycle;
FIG. 15 is a chart showing ROC and AUC scores obtained in Example 1;
FIG. 16 is a chart showing ROC and AUC scores obtained in Example 2;
FIG. 17 is a diagram showing an example of a decision tree generated in Example 3 (1);
FIG. 18 is a diagram showing an example of a decision tree generated in Example 3 (1);
FIG. 19 is a diagram showing an example of a decision tree generated in Example 3 (1);
FIG. 20 is a diagram showing an example of a decision tree generated in Example 3 (1);
FIG. 21 is a diagram showing an example of a decision tree generated in Example 3 (1);
FIG. 22 is a chart showing ROC and AUC scores obtained in Example 3 (1);
FIG. 23 is a diagram showing an example of a decision tree generated in Example 3 (2);
FIG. 24 is a diagram showing an example of a decision tree generated in Example 3 (2);
FIG. 25 is a diagram showing an example of a decision tree generated in Example 3 (2);
FIG. 26 is a diagram showing an example of a decision tree generated in Example 3 (2);
FIG. 27 is a diagram showing an example of a decision tree generated in Example 3 (2);
FIG. 28 is a chart showing ROC and AUC scores obtained in Example 3 (2);
FIG. 29 is a diagram showing an example of a decision tree generated in Example 3 (3);
FIG. 30 is a diagram showing an example of a decision tree generated in Example 3 (3);
FIG. 31 is a diagram showing an example of a decision tree generated in Example 3 (3);
FIG. 32 is a diagram showing an example of a decision tree generated in Example 3 (3);
FIG. 33 is a diagram showing an example of a decision tree generated in Example 3 (3);
FIG. 34 is a chart showing ROC and AUC scores obtained in Example 3 (3);
FIG. 35 is a chart showing coefficients of each formula;
FIG. 36 is a chart showing ROC_AUC;
FIG. 37 is a chart showing coefficients of logistic regression;
FIG. 38 is a chart showing ROC of logistic regression;
FIG. 39 is a chart showing feature importance;
FIG. 40 is a chart showing ROC of LightGBM;
FIG. 41 is a chart showing ROC of logistic regression;
FIG. 42 is a chart showing ROC of LightGBM;
FIG. 43 is a chart showing 11 explanatory variables selected;
FIG. 44 is a chart showing nine explanatory variables selected;
FIG. 45 is a chart showing 13 explanatory variables selected;
FIG. 46 is a chart showing combinations of two explanatory variables that constitute a two-variable model;
FIG. 47A is a chart showing combinations of three explanatory variables that constitute a three-variable model;
FIG. 47B is a chart showing combinations of three explanatory variables that constitute a three-variable model;
FIG. 47C is a chart showing combinations of three explanatory variables that constitute a three-variable model;
FIG. 48A is a chart showing combinations of four explanatory variables that constitute a four-variable model;
FIG. 48B is a chart showing combinations of four explanatory variables that constitute a four-variable model;
FIG. 48C is a chart showing combinations of four explanatory variables that constitute a four-variable model;
FIG. 48D is a chart showing combinations of four explanatory variables that constitute a four-variable model;
FIG. 49A is a chart showing combinations of five explanatory variables that constitute a five-variable model;
FIG. 49B is a chart showing combinations of five explanatory variables that constitute a five-variable model;
FIG. 49C is a chart showing combinations of five explanatory variables that constitute a five-variable model;
FIG. 49D is a chart showing combinations of five explanatory variables that constitute a five-variable model;
FIG. 50A is a chart showing combinations of six explanatory variables that constitute a six-variable model;
FIG. 50B is a chart showing combinations of six explanatory variables that constitute a six-variable model;
FIG. 50C is a chart showing combinations of six explanatory variables that constitute a six-variable model; and
FIG. 50D is a chart showing combinations of six explanatory variables that constitute a six-variable model.

### BEST MODE(S) FOR CARRYING OUT THE INVENTION

Hereinafter, an embodiment (first embodiment) of the evaluating method, the calculating method, and the formula generating method according to the present invention and an embodiment (second embodiment) of the evaluating apparatus, the calculating apparatus, the evaluating method, the calculating method, the evaluating program, the calculating program, the recording medium, the evaluating system, and the terminal apparatus according to the present invention are described in detail with reference to the drawings. The present invention is not limited to these embodiments.

### First Embodiment

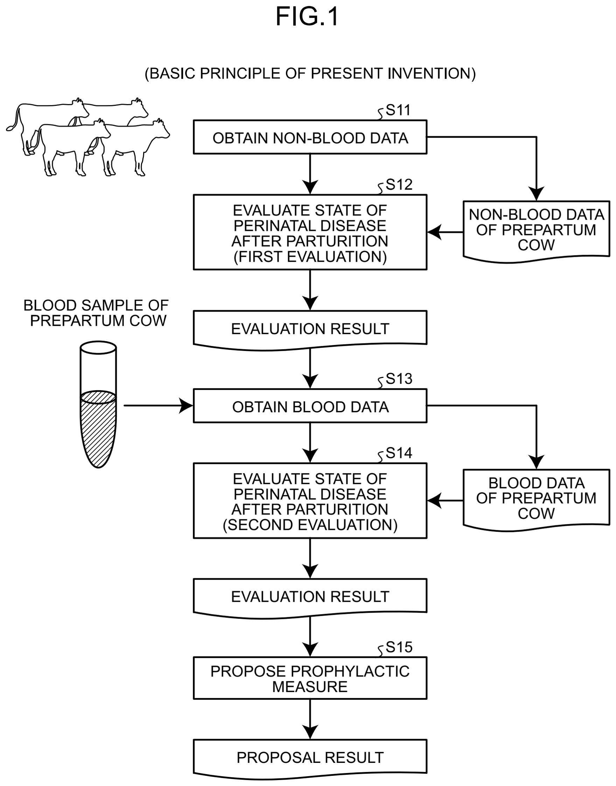

Here, an outline of the first embodiment will be described with reference to FIG. 1. FIG. 1 is a principle configurational diagram showing a basic principle of the first embodiment.

### 1-1. Primary screening

Primary screening which is screening performed without using cow blood is performed as follows.

First, non-blood data including a value (first value) on cattle management information obtainable by a non-invasive method is obtained for a cow to be evaluated before present parturition (step S11 in FIG. 1).

The non-invasive method is a method that does not burden or injure the cow, such as a method that obtains information from a sensor attached to the cow and a method that obtains information from feed design information on the cow.

The cow to be evaluated is, for example, but not limited to, a dairy cow (cow for milking) or a beef cow (a cow for beef).

The first value is at least one of the following eight numerical values: foraging time, rumination time, metabolizable protein sufficiency rate (MP sufficiency rate), metabolizable energy sufficiency rate (ME sufficiency rate), dry matter intake sufficiency rate (DMI sufficiency rate), milking volume, milk yield sufficiency rate, and days since last parturition.

The first value is, for example, a value in a predetermined lactation period. The predetermined lactation period includes, for example, four periods: fresh period (1 to 20 days after last parturition), early lactation period (21 to 80 days after last parturition), peak lactation period (81 to 180 days after last parturition), or late lactation period (181 days after last parturition to 60 days before present parturition).

The method of dividing the predetermined lactation period is not limited to the example described in the previous paragraph, but may be, for example, as follows. Specifically, (1) the period is divided into an early period (around 0 to 10 weeks), a mid period (around 10 to 20 weeks), and a late period (around 20 weeks and up), (2) the first 3 weeks of the early period is a fresh period, and (3) about 3 months after parturition when the milk yield reaches its peak is a peak period.

The foraging time is the time spent by the cow in the foraging behavior. The rumination time is the time spent by the cow in the ruminating behavior (the action of re-chewing the food that has been swallowed to the first stomach and then put back into the mouth). The foraging time and the rumination time can be obtained automatically on a daily basis as a behavioral history, for example, from a sensor (such as an accelerometer) attached to the cow.

The metabolizable protein sufficiency rate (MP sufficiency rate) is the ratio of metabolizable protein actually ingested to the amount of metabolizable protein assumed from the feed design information. The metabolizable energy sufficiency rate (ME sufficiency rate) is the ratio of metabolizable energy actually ingested to metabolizable energy assumed from the feed design information. The dry matter intake sufficiency rate (DMI sufficiency rate) is the ratio of the amount of dry matter intake actually ingested to the amount of dry matter intake assumed from the feed design information. The amount of dry matter intake is the amount of feed intake minus the equivalent amount of water.

The metabolizable protein sufficiency rate (MP sufficiency rate), the metabolizable energy sufficiency rate (ME sufficiency rate), and the dry matter intake sufficiency rate (DMI sufficiency rate) can be calculated using a relative ratio of foraging time. The relative ratio of foraging time can be calculated, for example, by the formula "(relative ratio of foraging time)=(weight of foraging time)/(mean of weights of foraging time in the herd)". The weight of foraging time can be calculated, for example, by the formula "(weight of foraging time)=(foraging time)^{λ}". The value of λ is adjusted so that the variance of the estimated DMI of the farm's past data is a specified value. By decreasing the value of λ, the weight for large intake times can be reduced.

The metabolizable protein sufficiency rate (MP sufficiency rate) can be calculated, for example, by the formula "(MP sufficiency rate)=(MP sufficiency rate per cow in feed design information)×(relative ratio of foraging time)".

The metabolizable energy sufficiency rate (ME sufficiency rate) can be calculated, for example, by the formula "(ME sufficiency rate)=(ME sufficiency rate per cow in feed design information)×(relative ratio of foraging time)".

The dry matter intake sufficiency rate (DMI sufficiency rate) can be calculated, for example, by the formula "(DMI sufficiency rate)=(estimated DMI) / (assumed DMI in feed design information)". The estimated DMI can be calculated, for example, by the formula "(estimated DMI)=(DMI per cow in feed design information)×(relative ratio of foraging time)".

The milking volume can be obtained, for example, from cow feed design information. The milk yield sufficiency rate is the ratio of the measured milk yield to the milk yield assumed from the feed design information. The milk yield sufficiency rate can be calculated, for example, by the formula "(milk yield sufficiency rate)=(actual milk yield)/(assumed milk yield in feed design information)".

The first value may be at least one of a parity number and a total number of milking days of the cow before present parturition. The parity number is the number indicating how many times the cow has experienced parturition.

The first value may further have an attribute of at least one of a parity number and a total number of milking days of the cow before present parturition. In other words, the first value may be a value in a predetermined parity number or a predetermined total number of milking days. For example, the foraging time of cattle management information can be expressed as a foraging time in a certain parity number (the number of times the cow has experienced parturition), or a foraging time in a certain total number of milking days.

The first value is, for example, at least one of two statistical values: mean and standard deviation.

The combination of the four lactation periods, the eight numerical values, and the two statistical values is defined as the basic data set. For example, an example of a combination that constitutes the basic data set is "the mean of the milking volume in the peak lactation period". Another example of a combination that constitutes the basic data set is "the standard deviation of the rumination time in the fresh period".

As the primary screening, a first evaluation is performed to evaluate (predict/estimate) a state of a metabolic disease in the cow to be evaluated after present parturition, using the first value contained in the non-blood data obtained at step S11 (step S12 in FIG. 1). Before step S12 is executed, data such as missing values and outliers may be removed from the non-blood data obtained at step S11.

In the first evaluation, at least one of (i) whether the cow to be evaluated has the metabolic disease after present parturition, and (ii) whether the cow to be evaluated does not have the metabolic disease after present parturition but needs a further evaluation (the second evaluation described below) may be evaluated.

The state of the metabolic disease is, for example, a state of a metabolic disease at a predetermined time point after present parturition. The metabolic disease is, for example, subclinical ketosis, clinical ketosis, metritis, placental retention, abomasum displacement, milk fever, acidosis, hoof disease, mastitis, or the like.

At step S12, the first evaluation may be performed by calculating a value of a formula for evaluating the state of the metabolic disease in the cow after present parturition, using the first value and the formula including an explanatory variable to be substituted with the first value. The explanatory variable to be substituted with the first value may be substituted with a value obtained by converting the first value by the later-described method.

When the state of ketosis after parturition is evaluated, for example, a value related to the factors listed below having an impact on the development of metabolic disease may further be used in addition to the first value. For example, an explanatory variable to be substituted with a value related to the factors listed below having an impact on the development of metabolic disease may further be included in the formula in addition to the explanatory variable to be substituted with the first value.
- parity term for indicating parous cow or nulliparous cow (binary variable); and
- body weight, food intake, body condition score (BCS), air temperature, humidity, breeding density, and season

The first value or the value of the formula may be converted, for example, by the methods listed below, and the state of postpartum metabolic disease in the subject to be evaluated may be evaluated using the converted value.

The first value or the value of the formula may be converted such that a possible range of the first value or the value of the formula falls within a predetermined range (for example, the range from 0.0 to 1.0, the range from 0.0 to 10.0, the range from 0.0 to 100.0, or the range from - 10.0 to 10.0), for example, by addition, subtraction, multiplication, and division of any given value with the first value or the value of the formula, by conversion of the first value or the value of the formula by a predetermined conversion method (for example, exponential transformation, logarithm transformation, angular transformation, square root transformation, probit transformation, reciprocal transformation, Box-Cox transformation, or power transformation), or by performing a combination of these computations on the first value or the value of the formula. For example, a value of an exponential function with the first value or the value of the formula as an exponent and Napier constant as the base may be further calculated (specifically, a value of p/(1-p) where a natural logarithm ln(p/(1-p)) is equal to the first value or the value of the formula when the probability p that the state of postpartum metabolic disease has the predetermined state (for example, the state where the blood concentration of BHBA exceeds the criterion value) is defined), and the value (specifically, the value of the probability p) may be further calculated by dividing the calculated value of the exponential function by the sum of 1 and the value of the exponential function.

The first value or the value of the formula may be converted such that the converted value is a particular value when a particular condition is met. For example, the first value or the value of the formula may be converted such that the converted value is 5.0 when the sensitivity is 95% and the converted value is 8.0 when the sensitivity is 80%.

After the first value is normally distributed, the first value may be standardized with a mean of 50 and a standard deviation of 10. As for the value of the formula, the value of the formula may be standardized with a mean of 50 and a standard deviation of 10.

Positional information about a position of a predetermined mark on a predetermined scale visually presented on a display device such as a monitor or a physical medium such as paper may be generated using (i) the first value (if the value is converted, the converted value) or (ii) the value of the formula (if the value of the formula is converted, the converted value), and the generated positional information may be treated as an evaluation result on the state of postpartum metabolic disease of the subject to be evaluated. The predetermined scale is for evaluating the state of postpartum metabolic disease and is, for example, a graduated scale at least marked with graduations corresponding to the upper limit value and the lower limit value in "a possible range of the first value or the value of the formula" or "part of the range". The predetermined mark corresponds to the first value or the value of the formula, or the converted value, and is, for example, a circle sign or a star sign.

If the first value or the value of the formula is lower than a predetermined value (e.g., mean ±1SD, 2SD, 3SD, N quantile, N percentile, or a cutoff value the clinical significance of which is recognized) or is equal to or lower than the predetermined value or is equal to or higher than the predetermined value or is higher than the predetermined value, the state of postpartum metabolic disease of the subject to be evaluated may be evaluated. In this case, instead of the first value or the value of the formula itself, a standard score may be used. For example, if the standard score is lower than the mean -2SD (when the standard score<30) or if the standard score is higher than the mean +2SD (when the standard score>70), the state of postpartum metabolic disease of the subject to be evaluated may be evaluated.

The risk (possibility) that the subject to be evaluated develops the metabolic disease after parturition may be qualitatively evaluated.

Specifically, the subject may be classified into any one of a plurality of categories defined at least considering the risk of developing the metabolic disease after parturition using (i) the first value and (ii) one or more preset thresholds or using (i) the first value, (ii) the formula including the explanatory variable to be substituted with the first value, and (iii) one or more preset thresholds. The categories may include (i) a category to which a subject with a high risk of developing the metabolic disease after parturition (for example, a subject having the blood concentration of BHBA after parturition equal to or higher than the criterion value (for example, 1200 µmol/dl)) belongs and (ii) a category to which a subject with a low risk of developing the metabolic disease after parturition (for example, a subject having the blood concentration of BHBA after parturition lower than the criterion value (for example, 1200 µmol/dl)) belongs. The categories may include (i) the category to which a subject with a high risk of developing the metabolic disease after parturition belongs, (ii) the category to which a subject with a low risk of developing the metabolic disease after parturition belongs, and (iii) a category to which a subject with an intermediate risk of developing the metabolic disease after parturition belongs.

For example, a blood concentration value of BHBA in blood of the subject to be evaluated after parturition may be estimated using (i) the first value and (ii) the one or more preset thresholds or using (i) the first value, (ii) the formula including the explanatory variable to be substituted with the first value, and (iii) the one or more preset thresholds.

The first value or the value of the formula may be converted by the predetermined method, and the subject to be evaluated may be classified into any one of the categories using the converted value.

As for the formula used for the evaluation, the form of the formula is not specifically designated, however, for example, may be the following forms.
- linear model such as multiple regression equation, linear discriminant, principal component analysis, and canonical discriminant analysis that are based on the least-squares method;
- generalized linear model such as logistic regression and Cox regression that are based on the maximum likelihood method;
- generalized linear mixed model considering random effects due to individual differences, facility differences, and other factors in addition to the generalized linear model;
- expression generated based on the Bayesian statistics such as the Markov chain Monte Carlo (MCMC), the Bayesian network, and the naive Bayesian method;
- expression generated by cluster analysis, such as the K-means method and hierarchical cluster analysis;
- expression generated by class classification such as k-nearest neighbor method, support vector machine, and decision tree;
- expression generated by deep learning based on a neural network and a convolutional neural network or a recursive neural network;
- expression generated by class classification based on ensemble learning such as random forest and gradient boosting;
- expression generated by class classification based on transfer learning based on an existing trained model;
- expression generated by a method such as fractional expression that does not belong to the above-cited categories; and
- expression represented as, for example, the summation of expressions of different forms

The formula used for the evaluation may be prepared by a method described in WO 2004/052191 that is an international application filed by the present applicant or by a method described in WO 2006/098192 that is an international application filed by the present applicant. Any formulae obtained by these methods can be preferably used in the evaluation of the state of postpartum metabolic disease, regardless of the units of the first value in the non-blood data as input data.

In the multiple regression equation, the multiple logistic regression equation, and the canonical discriminant function, a coefficient and a constant term are added to each explanatory variable, and the coefficient and the constant term may be preferably real numbers, more preferably values in the range of 99% confidence interval for the coefficient and the constant term obtained from data for the various kinds of classifications described above, more preferably values in the range of 95% confidence interval for the coefficient and the constant term obtained from data for the various kinds of classifications described above. The value of each coefficient and the confidence interval thereof may be those multiplied by a real number, and the value of the constant term and the confidence interval thereof may be those having an arbitrary actual constant added or subtracted or those multiplied or divided by an arbitrary actual constant. When an expression such as the logistic regression, the linear discriminant, and the multiple regression equation is used for the evaluation, a linear transformation of the expression (addition of a constant and multiplication by a constant) and a monotonic increasing (decreasing) transformation (for example, a logit transformation) of the expression do not alter evaluation performance and thus evaluation performance after transformation is equivalent to that before transformation. Therefore, the expression includes an expression that is subjected to the linear transformation and the monotonic increasing (decreasing) transformation.

In the fractional expression, the numerator of the fractional expression is expressed by the sum of the explanatory variables A, B, C, etc. and the denominator of the fractional expression is expressed by the sum of the explanatory variables a, b, c, etc. The fractional expression also includes the sum of the fractional expressions α, β, γ, etc. (for example, α+β) having such constitution. The fractional expression also includes divided fractional expressions. The explanatory variables used in the numerator or denominator may have suitable coefficients respectively. The explanatory variables used in the numerator or denominator may appear repeatedly. Each fractional expression may have a suitable coefficient. A value of a coefficient for each explanatory variable and a value for a constant term may be any real numbers. In a fractional expression and the one in which explanatory variables in the numerator and explanatory variables in the denominator in the fractional expression are switched with each other, the positive and negative signs are generally reversed in correlation with objective explanatory variables, but because their correlation is maintained, the evaluation performance can be assumed to be equivalent. The fractional expression therefore also includes the one in which explanatory variables in the numerator and explanatory variables in the denominator in the fractional expression are switched with each other.

At step S12, the first evaluation may be performed using a graph generated based on the first value. Specifically, the first evaluation may be performed by a convolutional neural network (CNN) using an image of the graph generated by plotting the days since the last parturition on one axis (X axis) and the milking volume on another axis (Y axis). The graph generated may be any diagram created using cattle management information, such as scatter diagram, line graph, radar chart, bar chart, pie chart, band chart, and histogram.

As explained above in this section [1-1], with the evaluating method according to the present embodiment, the state of the metabolic disease after present parturition can be evaluated before present parturition without using blood data. More specifically, the primary screening according to the present embodiment using information obtained on a daily basis from a sensor (the foraging time and the rumination time) and the feed design information, rather than cow blood data, can provide reliable information before present parturition on the state of the metabolic disease after present parturition. As a result, for example, it is possible to save dairy farmers the trouble of collecting blood samples from each cow.

Although the evaluating method including step S12 has been explained in this section [1-1], the present invention may also be a breeding method or a feeding method that includes step S12.

In the present embodiment, following the primary screening explained in [1-1], which is performed without using blood data, secondary screening (blood screening) explained in [1-2], which is performed using blood data, may be performed.

### 1-2. Secondary screening (blood screening)

Secondary screening (blood screening), which is screening using cow blood, is performed on "a cow determined as having a high risk of suffering from the metabolic disease in the primary screening" or "a cow excluding a healthy cow determined as having a very low risk of suffering from the metabolic disease in the primary screening".

The selection of a cow as a subject for the secondary screening can be done, for example, as follows. Specifically, as a result of the primary screening using decision trees and logistic regression, the top N cows (e.g., 12 cows) with higher risk values in the primary screening using logistic regression among the cows "at risk" in the primary screening using decision trees may be selected as the subjects for the secondary screening. The secondary screening is performed as follows.

First, blood data including a concentration value (second value) of an amino acid in blood (including, for example, plasma and serum) of the cow to be evaluated before present parturition is obtained (step S13 in FIG. 1). The blood data may further include a blood chemistry parameter along with or instead of the concentration value. For example, those described in International Publication WO 2018/003638 that is an international application by the present applicant can be used as the concentration value and the blood chemistry parameter.

At step S13, for example, the blood data measured by a company or other organization that measures the concentration value may be obtained. In addition, for example, the following measuring method of (A), (B), or (C) may be used to measure the concentration value from the blood extracted from the subject to be evaluated before parturition to obtain the blood data. Here, the unit of concentration value may be molar concentration, weight concentration, enzyme activity, or one obtained by addition, subtraction, multiplication, and division of any constant with these concentrations.
(A) Plasma is separated from blood by centrifuging the collected blood sample. All plasma samples are frozen and stored at -80°C until the concentration value is measured. At the time of measuring the concentration value, 0.02N hydrochloric acid is added to perform a protein removal treatment by ultrafiltration, pre-column derivatization is then performed using a labeled reagent (3-aminopyridyl-N-hydroxysuccinimidyl carbamate), and the concentration value is analyzed by liquid chromatograph mass spectrometer (LC/MS) (see International Publication WO 2003/069328 and International Publication WO 2005/116629).
(B) Plasma is separated from blood by centrifuging the collected blood sample. All plasma samples are frozen and stored at -80°C until the concentration value is measured. At the time of measuring the concentration value, 0.02N hydrochloric acid is added to perform a protein removal treatment by ultrafiltration, and the concentration value is analyzed by an amino acid analyzer based on post-column derivatization using a ninhydrin reagent.
(C) Blood cell separation is performed on the collected blood sample by using a membrane, MEMS (Micro Electro Mechanical Systems) technology, or the principle of centrifugation, whereby plasma or serum is separated from the blood. A plasma or serum sample the concentration value of which is not measured immediately after obtaining the plasma or the serum is frozen and stored at -80°C until the concentration value is measured. At the time of measuring the concentration value, a molecule that reacts with or binds to a target amino acid or biochemistry, such as an enzyme or an aptamer, and the like are used to perform quantitative analysis and the like on an increasing or decreasing substance or a spectroscopic value by substrate recognition, whereby the concentration value is analyzed.

As the secondary screening, a second evaluation is performed to evaluate (predict/estimate) the state of the metabolic disease in the cow to be evaluated after present parturition, using the second value contained in the blood data obtained at step S13 (step S14 in FIG. 1). Before step S14 is executed, data such as missing values and outliers may be removed from the blood data obtained at step S13.

At step S14, the second evaluation may be performed by calculating a value of a formula for evaluating the state of the metabolic disease in the cow after present parturition, using the second value and the formula including an explanatory variable to be substituted with the second value. The explanatory variable to be substituted with the second value may be substituted with a value obtained by converting the second value by the later-described method.

The description of terms, statistical analysis methods, and the like in [1-1] can be incorporated as they are or by replacement in the description of terms, statistical analysis methods, and the like in this section [1-2].

As explained above in this section [1-2], with the evaluating method according to the present embodiment, the secondary screening using blood data can be performed after narrowing down the number of cows by the primary screening. In this way, the dairy farmers do not have to collect blood samples from all cows even when the secondary screening is performed, thereby greatly reducing the burden on the dairy farmers.

### 1-3. Tertiary screening (classification of intermediate-risk group)

Tertiary clustering, which is clustering using information on cattle management information obtainable by a non-invasive method, is performed on cows (intermediate-risk group cows) excluding "cows determined as having a very high risk of suffering from the metabolic disease in the secondary screening (high-risk group cows)" and "healthy cows determined as having a low risk of suffering from the metabolic disease in the secondary screening (low-risk group cows)".

The high-risk group cows are cows that require a prophylactic measure based on veterinary diagnosis. The low-risk group cows are cows that do not require a prophylactic measure.

The intermediate-risk group cows are cows for which a prophylactic measure by administration of feed additives is effective. By further classifying the intermediate-risk group cows by the tertiary clustering, an appropriate feed additive for each category can be determined in consideration of attribute information, causal relationships, and mechanism of action for each category.

In other words, the tertiary clustering is a third evaluation that follows the second evaluation (step S14) and evaluates the state of the metabolic disease in the cow after present parturition, using (i) a third value, which is a value on cattle management information obtainable by a non-invasive method, or (ii) a value of a formula calculated using the third value and the formula including an explanatory variable to be substituted with the third value, or (iii) a graph generated based on the third value.

The selection of a cow as a subject for the tertiary clustering can be done, for example, as follows. Specifically, cows excluding the top N cows (e.g., 12 cows) with higher risk values and the bottom M cows (e.g., 10 cows) with lower risk values as a result of the secondary screening using logistic regression may be selected as the subjects for the tertiary clustering.

Hierarchical clustering, non-hierarchical clustering such as the k-means method, and mixed Gaussian models can be used as methods of the tertiary clustering. The method disclosed in JP-A-2022-013409 can also be used.

### 1-4. Proposal of prophylactic measure

A prophylactic measure is proposed for a cow evaluated in the evaluating step as having a high possibility of suffering from the metabolic disease after parturition (step S15 in FIG. 1). The proposal of a prophylactic measure may be made after only the first evaluation (primary screening) is performed, or after the first evaluation (primary screening) and the second evaluation (secondary screening) are performed, or after the first evaluation (primary screening), the second evaluation (secondary screening), and the third evaluation (tertiary screening) are performed.

The prophylactic measure is, for example, at least one selected from the group consisting of administration of rumen-protected amino acids such as AjiPro (registered trademark)-L, administration of a feed additive, administration of a drug, and veterinary diagnosis. For example, those described in International Publication WO 2008/041371 that is an international application by the present applicant can be used as AjiPro (registered trademark)-L. The feed additive is, for example, at least one selected from the group consisting of PH adjusters, ion balance adjusters, mycotoxin adsorbents, propionate analogs such as calcium propionate, vitamins, minerals, amino acids, fatty acids, urea, probiotics, yeasts, enzymes, antibiotics, antioxidants, antibacterial agents, and organic acids.

At step S15, statistical causal inference may be performed to infer a cause of disease for a cow evaluated as having a possibility of suffering from the metabolic disease, and a prophylactic measure corresponding to the cause may be proposed. Specifically, in the proposal of the prophylactic measure, the prophylactic measure may be changed according to the first evaluation (primary screening) and the degree of metabolic disease risk. For example, a clustering analysis may be performed for cows evaluated as having an intermediate risk in the primary screening to further subdivide the degree of risk and propose the cause and the corresponding prophylactic measure for each degree. For example, for clustering after the primary screening, the prophylactic measure may be proposed for each leaf node based on the results of the decision tree in which the primary screening is conducted. The type of prophylactic measure may be further selected by performing a causal search analysis for the intermediate-risk group cows after the primary screening to analyze causality between explanatory variables and metabolic diseases. For the cows evaluated as having a high risk in the primary screening, the prophylactic measure may be proposed by veterinary individual handling.

Specific examples of the proposal of the prophylactic measure is explained below.

In the proposal of the prophylactic measure, change in feed design information may be proposed as explained below, using the metabolizable energy sufficiency rate (ME sufficiency rate) or the metabolizable protein sufficiency rate (MP sufficiency rate) and the result of secondary screening (blood screening).

First, the required criterion for the fresh period is set such that the ME sufficiency rate or the MP sufficiency rate in the fresh period (1 to 20 days after the last parturition) exceeds 80%. However, if the result of the secondary screening is "positive (high risk)", +2% is set for the ME sufficiency rate and +6% is set for the MP sufficiency rate as +α required criteria.

It is determined whether the nutritional state is "sufficiency" or "deficiency", using the ME sufficiency rate or the MP sufficiency rate, the result of the secondary screening, and the required criterion for the fresh period. For example, if there is a cow with "ME sufficiency rate=85%, secondary screening result=negative", the determination result is "sufficiency" because the ME sufficiency rate of the cow=85% exceeds the required criterion=80% for the fresh period. On the other hand, for example, if there is a cow with "ME sufficiency rate=81%, secondary screening result=positive", the determination result is "deficiency" because the ME sufficiency rate of the cow=81% does not exceed the required criterion=82% (+2% because of being positive) for the fresh period. When the result of the secondary screening is "ME sufficiency rate=120%, secondary screening result=positive", the determination may be "excessive" because the risk may be increased when the sufficiency rate exceeds 100%.

In this way, it is determined whether each cow falls into "sufficiency" or "deficiency", and a fresh period score is calculated using the determination result. The fresh period score can be calculated by multiplying "1-(number of cows determined to be deficient/total number of cows in fresh period)" by 100. For example, if the "number of cows determined to be deficient" is 12 for a total number of 30 cows in the fresh period, the fresh period score can be calculated as 60 pt by multiplying "1-(12/30)" by 100.

On the other hand, the required criterion for the late lactation period is set such that the ME sufficiency rate or the MP sufficiency rate in the late lactation period (181 days after last parturition to 60 days before present parturition) is equal to or less than 120%.

It is determined whether the nutritional state is "acceptable" or "obese", using the ME sufficiency rate or the MP sufficiency rate and the required criterion for the late lactation period. For example, if there is a cow with "ME sufficiency=100%", the determination result is "acceptable" because the ME sufficiency rate of the cow=100% is less than the required criterion=120% for the late lactation period. On the other hand, for example, if there is a cow with "ME sufficiency rate=125%", the determination result is "obese" because the ME sufficiency rate of the cow=125% is not equal to or less than the required criterion=120% for the late lactation period.

In this way, it is determined whether each cow falls into "acceptable" or "obese", and a late lactation period score is calculated using the determination result. The late lactation period score can be calculated by multiplying "1-(number of cows determined to be obese/total number of cows in late lactation period)" by 100. For example, if the "number of cows determined to be obese" is 20 cows for a total number of 120 cows in the late lactation period, the late lactation period score can be calculated as 83.3 pt by multiplying "1-(20/120)" by 100.

A health score (combined value) is then calculated based on the calculated fresh period score and the calculated late lactation period score. The health score can be calculated using the formula "fresh period score×fresh period importance+late lactation period score×late lactation period importance". The fresh period importance:late lactation importance can be set as appropriate such that "fresh period importance+late lactation period importance=1", for example, 0.6:0.4. By substituting the values explained so far into the formula, the health score can be calculated as "fresh period score 60 pt×fresh period importance 0.6+late lactation period score 83.3 pt×late lactation importance 0.4"=69.3 pt.

Finally, change in feed design information is proposed, based on the calculated health score. The calculated health score of 69.3 pt is the current health score calculated using the current feed design information. In a similar way, a provisional health score can be calculated using provisional feed design information (e.g., with nutrient concentrations changed). If the calculated provisional health score is greater than the current health score of 69.3 pt, it means that the provisional feed design information is more favorable, and therefore, the change in feed design information may be proposed by proposing the provisional feed design information instead of the current feed design information.

### 1-5. Generation of formula for evaluating state of metabolic disease

Prior to the primary screening, a formula for evaluating, before present parturition, a state of a metabolic disease in a cow after present parturition may be generated as follows.

First, the first value, which is a value on cattle management information obtainable by a non-invasive method, is obtained for a cow before present parturition.

The cow is, for example, but not limited to, a dairy cow (cow for milking) or a beef cow (a cow for beef).

The first value is, for example, at least one of foraging time, rumination time, metabolizable protein sufficiency rate (MP sufficiency rate), metabolizable energy sufficiency rate (ME sufficiency rate), dry matter intake sufficiency rate (DMI sufficiency rate), milking volume, milk yield sufficiency rate, and days since last parturition. The first value is, for example, a value in a predetermined lactation period.

The first value may be at least one of a parity number and a total number of milking days of the cow before present parturition.

The first value may further have an attribute of at least one of a parity number and a total number of milking days of the cow before present parturition.

The first value is, for example, at least one of the two statistical values: mean and standard deviation.

On the other hand, the state of the metabolic disease in the cow after present parturition is obtained. The state of the metabolic disease in the cow after present parturition is, for example, (i) whether the cow has the metabolic disease after present parturition, or (ii) whether the cow does not have the metabolic disease after present parturition but needs to be examined.

When whether the cow has the metabolic disease after present parturition is obtained as the state of the metabolic disease in the cow after present parturition, either-or choice information indicating whether the cow is suffering from the metabolic disease may be obtained, or stepwise information may be obtained indicating whether the cow falls into any one state of a clinical ketosis state indicating the blood concentration of BHBA after parturition is 3000 µmol/l or more, a subclinical ketosis state indicating the blood concentration of BHBA after parturition is 1200 µmol/l or more, and a non-ketosis state indicating the blood concentration of BHBA after parturition is less than 1200 µmol/l.

The state of the metabolic disease is, for example, a state of a metabolic disease at a predetermined time point after present parturition. The metabolic disease is, for example, subclinical ketosis, clinical ketosis, metritis, placental retention, abomasum displacement, milk fever, acidosis, hoof disease, mastitis, or the like.

A formula for evaluating, before present parturition, the state of the metabolic disease in the cow after present parturition is then generated by a predetermined analytical method, using the obtained first value and the obtained state of the metabolic disease in the cow after present parturition as training data.

The predetermined analytical method is, for example, but not limited to, at least one analytical method selected from the group consisting of decision trees, random forests, neural networks, and logistic regression. Examples of the neural networks include convolutional neural networks (CNN).

The description of terms in [1-1] can be incorporated as they are or by replacement in the description of terms in this section [1-5].

### Second Embodiment

### 2-1. Outline of the second embodiment

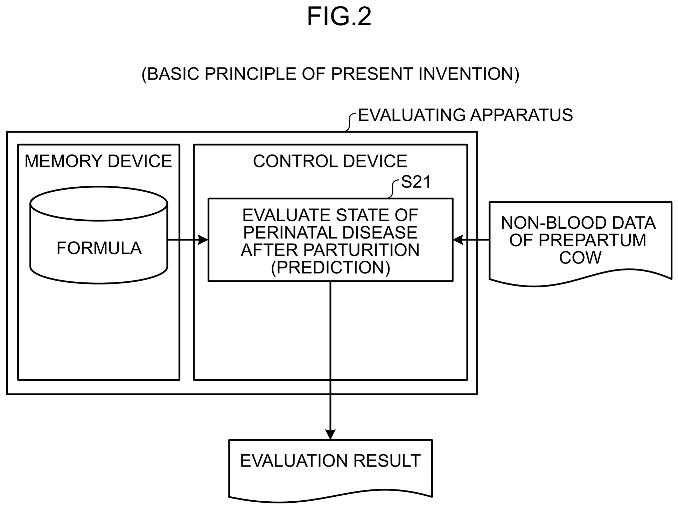

Here, outlines of the second embodiment will be described in detail with reference to FIG. 2. FIG. 2 is a principle configurational diagram showing a basic principle of the second embodiment. In the description of the present second embodiment, description duplicating that of the first embodiment is sometimes omitted. In particular, herein, when the state of postpartum metabolic disease is evaluated, a case of using a value of a formula or the converted value of the value of the formula is described as one example. However, for example, the first value or the converted value thereof may be used.

A control device evaluates the state of postpartum metabolic disease for the subject to be evaluated by calculating the value of the formula using (i) the first value included in the non-blood data and (ii) the formula previously stored in a memory device including the explanatory variable to be substituted with the first value (step S21 in FIG. 2).

The formula used at step S21 may be generated based on the formula-preparing processing (step 1 to step 4) described below. Here, the summary of the formula-preparing processing is described.

First, the control device prepares a candidate formula (e.g., y=a1x1+a2x2+...+anxn, y: BHBA data, xi: non-blood data, ai: constant, i=1,2, ..., n), based on a predetermined formula-preparing method from BHBA state information (data such as missing values and outliers may be removed from the BHBA state information in advance) previously stored in the memory device containing the non-blood data including the first value and the BHBA data on the concentration value of BHBA in the blood after parturition (step 1).

At step 1, a plurality of the candidate formulae may be prepared from the BHBA state information by using a plurality of the different formula-preparing methods (including those for multivariate analysis such as the principal component analysis, the discriminant analysis, the support vector machine, the multiple regression analysis, the Cox regression analysis, the logistic regression analysis, the K-means method, the cluster analysis, and the decision tree). Specifically, a plurality of groups of the candidate formulae may be prepared simultaneously and concurrently by using a plurality of different algorithms with the BHBA state information which is multivariate data composed of the non-blood data before parturition and the BHBA data after parturition obtained from a large number of cows. For example, the two different candidate formulae may be formed by performing the discriminant analysis and the logistic regression analysis simultaneously with the different algorithms. Alternatively, the candidate formula may be formed by converting the BHBA state information with the candidate formula prepared by performing the principal component analysis and then performing the discriminant analysis of the converted BHBA state information. In this way, it is possible to finally prepare the most suitable formula for the evaluation.

The candidate formula prepared by the principal component analysis is a linear expression including each explanatory variable maximizing the variance of all non-blood data. The candidate formula prepared by the discriminant analysis is a high-powered expression (including exponential and logarithmic expressions) including each explanatory variable minimizing the ratio of the sum of the variances in respective groups to the variance of all non-blood data. The candidate formula prepared by using the support vector machine is a high-powered expression (including kernel function) including each explanatory variable maximizing the boundary between groups. The candidate formula prepared by using the multiple regression analysis is a high-powered expression including each explanatory variable minimizing the sum of the distances from all non-blood data. The candidate formula prepared by using the Cox regression analysis is a linear model including a logarithmic hazard ratio, and is a linear expression including each explanatory variable with a coefficient thereof maximizing the likelihood of the linear model. The candidate formula prepared by using the logistic regression analysis is a linear model expressing logarithmic odds of probability, and a linear expression including each explanatory variable maximizing the likelihood of the probability. The K-means method is a method of searching k pieces of neighboring non-blood data in various groups, designating the group containing the greatest number of the neighboring points as its data-belonging group, and selecting the explanatory variable that makes the group to which input blood data belong agree well with the designated group. The cluster analysis is a method of clustering (grouping) the points closest in entire non-blood data. The decision tree is a method of ordering explanatory variables and predicting the group of non-blood data from the pattern possibly held by the higher-ordered explanatory variable.

Returning to the description of the formula-preparing processing, the control device verifies (mutually verifies) the candidate formula prepared at step 1 based on a particular verifying method (step 2). The verification of the candidate formula is performed for each candidate formula prepared at step 1. At step 2, at least one of discrimination rate, sensitivity, specificity, information criterion, ROC_AUC (area under the curve in a receiver operating characteristic curve), and the like of the candidate formula may be verified by at least one of bootstrap method, holdout method, N-fold method, leave-one-out method, and the like. In this way, it is possible to prepare the candidate formula higher in predictability or robustness, by taking the BHBA state information and the evaluation condition into consideration.

In the present description, the discrimination rate is, for example, a rate in which a subject to be evaluated that developed metabolic disease after parturition (specifically, the subject to be evaluated having the concentration value of BHBA in the blood after parturition equal to or higher than the criterion value (for example, being equal to or higher than 1200 µmol/dl)) is correctly evaluated to have "a high risk (more specifically, being equal to or higher than the criterion value)" by the evaluation method according to the present embodiment and a subject to be evaluated that did not develop metabolic disease after parturition (specifically, the subject to be evaluated having the concentration value of BHBA in the blood after parturition lower than the criterion value (for example, being lower than 1200 µmol/dl)) is correctly evaluated to have "a low risk (more specifically, being lower than the criterion value)" by the evaluation method according to the present embodiment. In the present description, the sensitivity is, for example, a rate in which a subject to be evaluated that developed metabolic disease after parturition (specifically, the subject to be evaluated having the concentration value of BHBA in the blood after parturition equal to or higher than the criterion value) is correctly evaluated to have "a high risk (more specifically, being equal to or higher than the criterion value)" by the evaluation method according to the present embodiment. In the present description, the specificity is, for example, a rate in which a subject to be evaluated that did not develop metabolic disease after parturition (specifically, the subject to be evaluated having the concentration value of BHBA in the blood after parturition lower than the criterion value) is correctly evaluated to have "a low risk (more specifically, being lower than the criterion value)" by the evaluation method according to the present embodiment. The Akaike information criterion is a criterion representing how observation data agrees with a statistical model, for example, in the regression analysis, and it is determined that the model in which the value defined by "-2×(maximum log-likelihood of statistical model)+2×(the number of free parameters of statistical model)" is smallest is the best. The ROC_AUC (the area under the receiver operating characteristics curve) is defined as the area under the receiver operating characteristics curve (ROC) created by plotting (x, y)=(1-specificity, sensitivity) on two-dimensional coordinates. The value of ROC_AUC is 1 in perfect discrimination, and the closer this value is to 1, the higher the discriminative characteristic. The predictability is the average of discrimination rates, sensitivities, or specificities obtained by repeating the validation of the candidate formula. The robustness refers to the variance of discrimination rates, sensitivities, or specificities obtained by repeating the validation of the candidate formula.

Returning to the description of the formula-preparing processing, the control device selects a combination of the non-blood data contained in the BHBA state information used in preparing the candidate formula, by selecting an explanatory variable of the candidate formula based on a predetermined explanatory variable-selecting method (step 3). At step 3, the selection of the explanatory variable may be performed on each candidate formula prepared at step 1. In this way, it is possible to select the explanatory variable of the candidate formula properly. Step 1 is executed once again by using the BHBA state information including the non-blood data selected at step 3. At step 3, the explanatory variable of the candidate formula may be selected based on at least one of stepwise method, best path method, local search method, and genetic algorithm from the verification result obtained at step 2. The best path method is a method of selecting an explanatory variable by optimizing an evaluation index of the candidate formula while eliminating the explanatory variables contained in the candidate formula one by one.

Returning to the description of the formula-preparing processing, the control device prepares the formula used for the evaluation by repeatedly performing steps 1, 2 and 3, and based on the verification results thus accumulated, selecting the candidate formula used for the evaluation from the candidate formulae (step 4). In the selection of the candidate formula, there are cases where the optimum formula is selected from the candidate formulae prepared in the same formula-preparing method or the optimum formula is selected from all candidate formulae.

As described above, in the formula-preparing processing, the processing for the preparation of the candidate formulae, the verification of the candidate formulae, and the selection of the explanatory variables in the candidate formulae is performed based on the BHBA state information in a series of operations in a systematized manner, whereby the formula most appropriate for evaluating the state of postpartum metabolic disease can be prepared. In other words, in the formula-preparing processing, the non-blood data is used in multivariate statistical analysis, and for selecting the optimum and robust combination of the explanatory variables, the explanatory variable-selecting method is combined with cross-validation to extract the formula having high evaluation performance.

Although the outline of the second embodiment in the case where the primary screening is performed has been explained in this section [2-1], it can be incorporated in the outline of the second embodiment in the case where the secondary screening is performed by replacing "non-blood data" in this section [2-1] with "blood data" and replacing "first value" in this section [2-1] with "second value".

### 2-2. System configuration

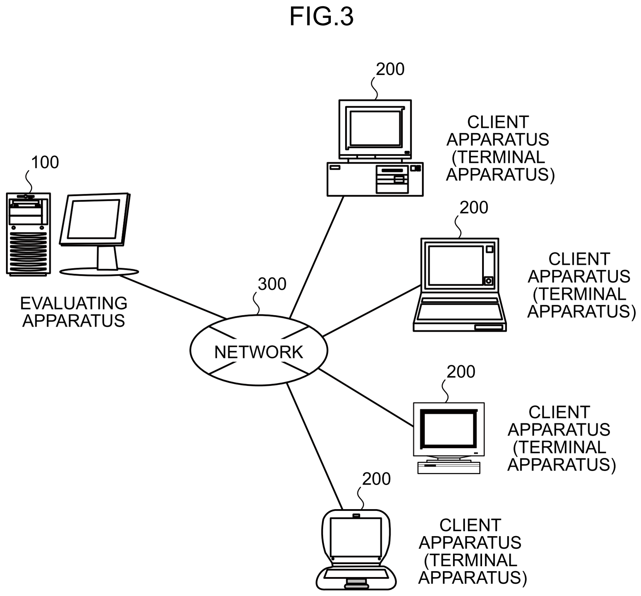

Hereinafter, the configuration of the evaluating system according to the second embodiment (hereinafter, referred to sometimes as the present system) will be described with reference to FIGS. 3 to 13. This system is merely one example, and the present invention is not limited thereto. In particular, herein, when the state of postpartum metabolic disease is evaluated, a case of using a value of a formula or the converted value of the value of the formula is described as one example. However, for example, the first value or the converted value thereof may be used.

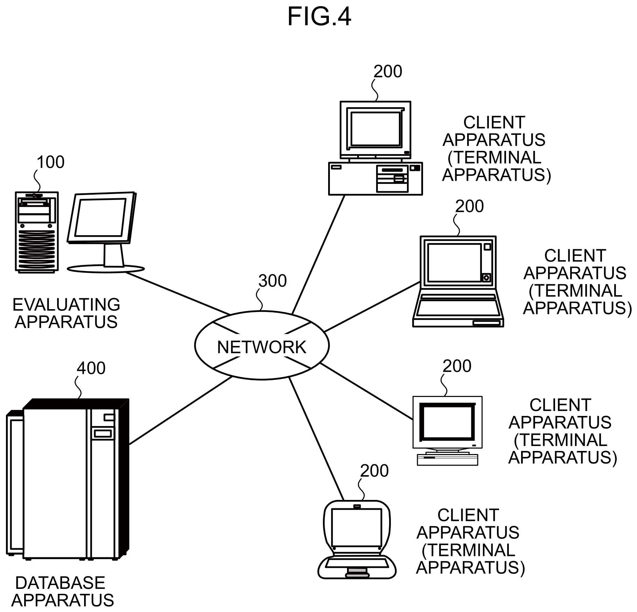

First, an entire configuration of the present system will be described with reference to FIGS. 3 and 4. FIG. 3 is a diagram showing an example of the entire configuration of the present system. FIG. 4 is a diagram showing another example of the entire configuration of the present system. As shown in FIG. 3, the present system is constituted in which the evaluating apparatus 100 that evaluates the state of postpartum metabolic disease and the client apparatus 200 (corresponding to the terminal apparatus of the present invention) that provides the non-blood data are communicatively connected to each other via a network 300. In the present system as shown in FIG. 4, in addition to the evaluating apparatus 100 and the client apparatus 200, the database apparatus 400 storing, for example, the BHBA state information used in preparing the formula in the evaluating apparatus 100 and the formula used for the evaluation may be communicatively connected via the network 300.

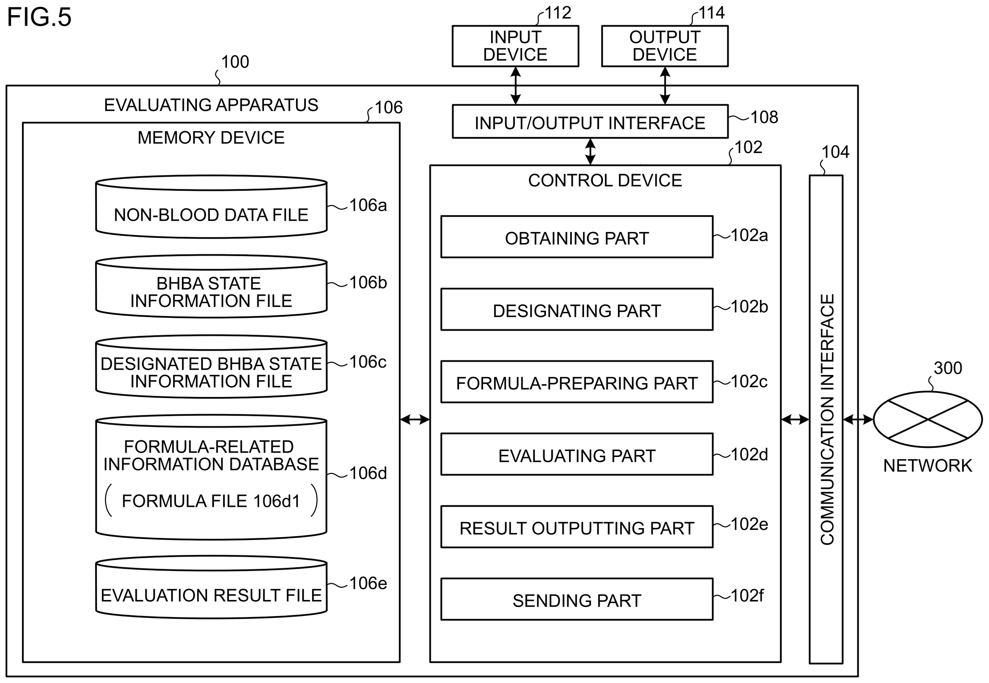

Now, the configuration of the evaluating apparatus 100 in the present system will be described with reference to FIGS. 5 to 11. FIG. 5 is a block diagram showing an example of the configuration of the evaluating apparatus 100 in the present system, showing conceptually only the region relevant to the present invention.

The evaluating apparatus 100 includes (i) a control device 102, such as CPU (Central Processing Unit), that integrally controls the evaluating apparatus, (ii) a communication interface 104 that connects the evaluating apparatus to the network 300 communicatively via communication apparatuses such as a router and wired or wireless communication lines such as a private line, (iii) a memory device 106 that stores various databases, tables, files and others, and (iv) an input/output interface 108 connected to an input device 112 and an output device 114, and these parts are connected to each other communicatively via any communication channel. The evaluating apparatus 100 may be present together with various analyzers (e.g., a non-blood data analyzer) in a same housing. For example, the evaluating apparatus 100 may be a compact analyzing device including components (hardware and software) that calculate (measure) the first value and output (e.g., print or display on a monitor) the calculated value, wherein the compact analyzing device further includes the evaluating part 102d described later, and using the components to output results obtained by the evaluating part 102d.

The communication interface 104 allows communication between the evaluating apparatus 100 and the network 300 (or a communication apparatus such as a router). Thus, the communication interface 104 has a function to communicate data via a communication line with other terminals.

The input/output interface 108 is connected to the input device 112 and the output device 114. A monitor (including a home television), a speaker, or a printer may be used as the output device 114. A keyboard, a mouse, a microphone, or a monitor functioning as a pointing device together with a mouse may be used as the input device 112.

The memory device 106 is a storage means, and examples thereof include a memory apparatus such as RAM (Random Access Memory) and ROM (Read Only Memory), a fixed disk drive such as a hard disk, a flexible disk, and an optical disk. The memory device 106 stores computer programs giving instructions to the CPU for various processings, together with OS (Operating System). As shown in the figure, the memory device 106 stores the non-blood data file 106a, the BHBA state information file 106b, the designated BHBA state information file 106c, a formula-related information database 106d, and the evaluation result file 106e.

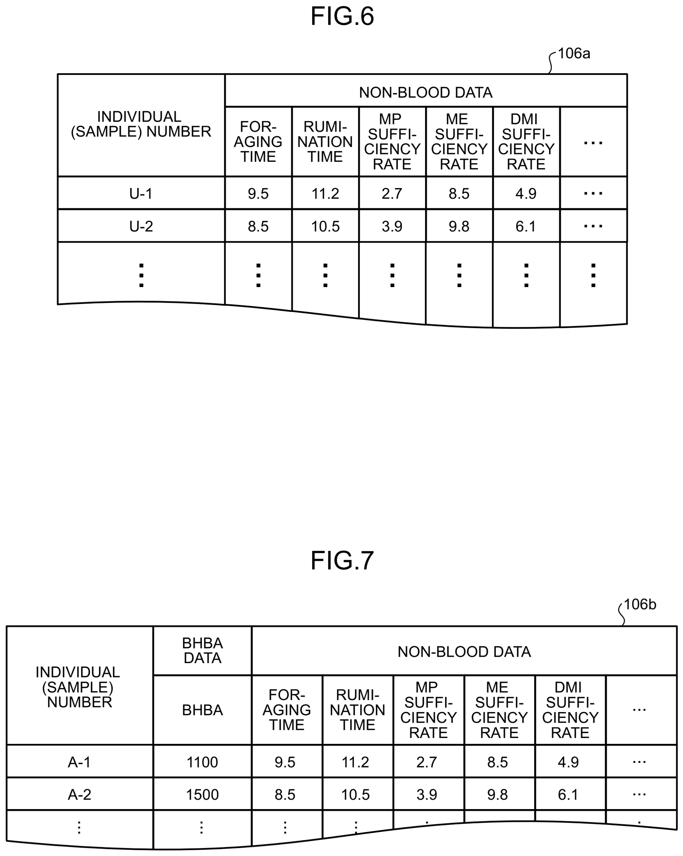

The non-blood data file 106a stores the non-blood data on the first value. FIG. 6 is a chart showing an example of information stored in the non-blood data file 106a. As shown in FIG. 6, the information stored in the non-blood data file 106a includes an individual number for uniquely identifying an individual (sample) as the subject to be evaluated and the non-blood data that are correlated to one another. In FIG. 6, the non-blood data is assumed to be numerical values, i.e., on a continuous scale, but the non-blood data may be expressed on a nominal scale or an ordinal scale. In the case of the nominal or ordinal scale, any number may be allocated to each state for analysis. The non-blood data may be combined with the value related to the factors described above having an impact on the development of metabolic disease.

Returning to FIG. 5, the BHBA state information file 106b stores the BHBA state information used in preparing the formula. FIG. 7 is a chart showing an example of information stored in the BHBA state information file 106b. As shown in FIG. 7, the information stored in the BHBA state information file 106b includes the individual number, the BHBA data (T) representing the concentration value of BHBA in blood after parturition, and the non-blood data that are correlated to one another. In FIG. 7, the BHBA data and the non-blood data are assumed to be numerical values, i.e., on a continuous scale, but the BHBA data and the non-blood data may be expressed on a nominal scale or an ordinal scale. In the case of the nominal or ordinal scale, any number may be allocated to each state for analysis.

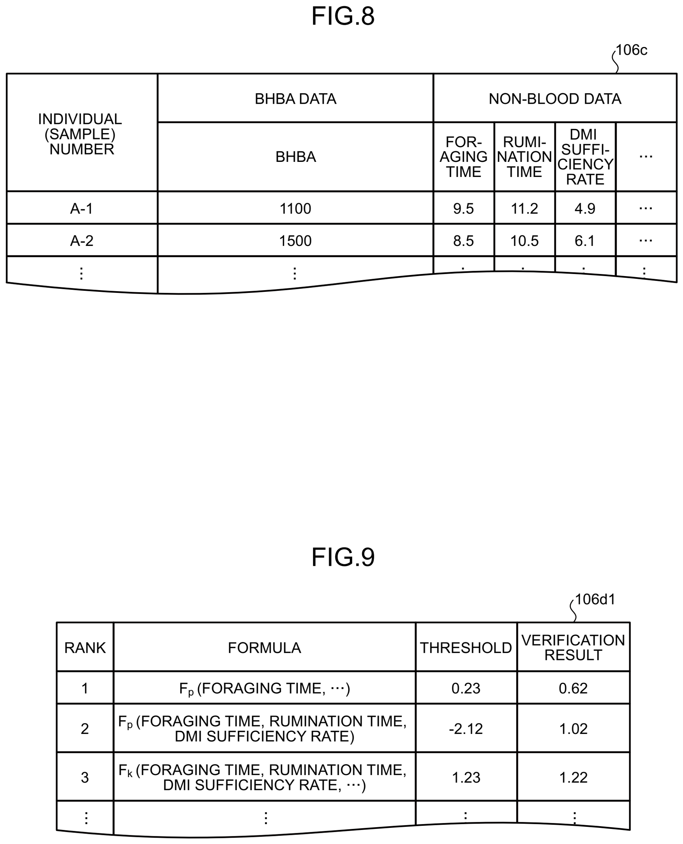

Returning to FIG. 5, the designated BHBA state information file 106c stores the BHBA state information designated in a designating part 102b described below. FIG. 8 is a chart showing an example of information stored in the designated BHBA state information file 106c. As shown in FIG. 8, the information stored in the designated BHBA state information file 106c includes the individual number, the designated BHBA data, and the designated non-blood data that are correlated to one another.

Returning to FIG. 5, the formula-related information database 106d is composed of the formula file 106d1 storing the formula prepared in a formula-preparing part 102c described below. The formula file 106d1 stores the formulae used for the evaluation. FIG. 9 is a chart showing an example of information stored in the formula file 106d1. As shown in FIG. 9, the information stored in the formula file 106d1 includes a rank, the formula (e.g., Fp (foraging time, ...), Fp (foraging time, rumination time, DMI sufficiency rate, ...), Fk (foraging time, rumination time, DMI sufficiency rate, ...) in FIG. 9), a threshold corresponding to each formula-preparing method, and the verification result of each formula (e.g., the value of each formula) that are correlated to one another.

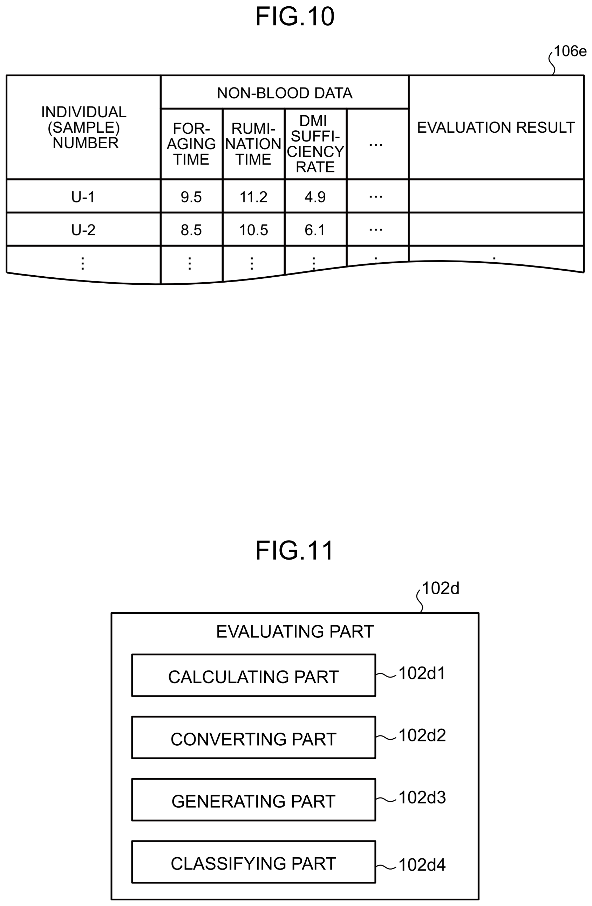

Returning to FIG. 5, the evaluation result file 106e stores the evaluation results obtained in the evaluating part 102d described below. FIG. 10 is a chart showing an example of information stored in the evaluation result file 106e. The information stored in the evaluation result file 106e includes the individual number for uniquely identifying the individual (sample) as the subject to be evaluated, the previously obtained non-blood data of the individual, and the evaluation result on the state of postpartum metabolic disease (for example, the value of the formula calculated by a calculating part 102d1 described below, the converted value obtained by a converting part 102d2 described below, the positional information generated by a generating part 102d3 described below, or the classification result obtained by a classifying part 102d4 described below) that are correlated to one another.

Returning to FIG. 5, the control device 102 has an internal memory storing, for example, control programs such as OS (Operating System), programs for various processing procedures, and other needed data, and performs various information processings according to these programs. As shown in the figure, the control device 102 includes mainly an obtaining part 102a, the designating part 102b, the formula-preparing part 102c, the evaluating part 102d, a result outputting part 102e, and a sending part 102f. The control device 102 performs data processings, such as removal of data including missing values, removal of data including many outliers, and removal of explanatory variables for the data including missing values, in the BHBA state information transmitted from the database apparatus 400 and in the non-blood data transmitted from the client apparatus 200.

The obtaining part 102a obtains information (specifically, the non-blood data, the BHBA state information, and the formula, etc.). For example, the obtaining part 102a may obtain the information by receiving, via the network 300, information (specifically, the non-blood data, the BHBA state information, and the formula, etc.) transmitted from the client apparatus 200 and the database apparatus 400. The obtaining part 102a may receive data used for evaluation transmitted from a client apparatus 200 different from the client apparatus 200 to which the evaluation results are transmitted. For example, if the evaluating apparatus 100 includes a mechanism (including hardware and software) for reading information recorded on a recording medium, the obtaining part 102a may obtain the information (specifically, the non-blood data, the BHBA state information, and the formula, etc.) by reading the information recorded on the recording medium via the mechanism. The designating part 102b designates objective BHBA data and objective non-blood data in preparing the formula.

The formula-preparing part 102c generates the formula based on the BHBA state information obtained by the obtaining part 102a or the BHBA state information designated in the designating part 102b. If the formulae are stored previously in a predetermined region of the memory device 106, the formula-preparing part 102c may generate the formula by selecting the desired formula out of the memory device 106. Alternatively, the formula-preparing part 102c may generate the formula by selecting and downloading the desired formula from another computer apparatus (e.g., the database apparatus 400) in which the formulae are previously stored.

The evaluating part 102d evaluates the state of postpartum metabolic disease of the individual by calculating the value of the formula using (i) the previously obtained formula (for example, the formula prepared by the formula-preparing part 102c or the formula obtained by the obtaining part 102a) and (ii) the first value included in the non-blood data obtained by the obtaining part 102a. The evaluating part 102d may evaluate the state of postpartum metabolic disease of the individual, using the first value or the converted value thereof.

The evaluating part 102d may evaluate the state of postpartum metabolic disease of the individual, using a graph generated based on the first value included in the non-blood data obtained by the obtaining part 102a. Specifically, the evaluating part 102d may evaluate the state of postpartum metabolic disease of the individual by a convolutional neural network (CNN) using an image of the graph generated by plotting the days since the last parturition on one axis (X axis) and the milking volume on another axis (Y axis).

Hereinafter, a configuration of the evaluating part 102d will be described with reference to FIG. 11. FIG. 11 is a block diagram showing the configuration of the evaluating part 102d, and only a part in the configuration related to the present invention is shown conceptually. The evaluating part 102d includes the calculating part 102d1, the converting part 102d2, the generating part 102d3, and the classifying part 102d4, additionally.

The calculating part 102d1 calculates the value of the formula using the first value and the formula including an explanatory variable to be substituted with the first value. The evaluating part 102d may store the value of the formula calculated by the calculating part 102d1 as the evaluation result in a predetermined region of the evaluation result file 106e.

The converting part 102d2 converts the value of the formula calculated by the calculating part 102d1, for example, by the conversion method described above. The converting part 102d2 may convert the first value included in the non-blood data, for example, by the conversion method described above. The evaluating part 102d may store the converted value by the converting part 102d2 as the evaluation result in a predetermined region of the evaluation result file 106e.

The generating part 102d3 generates the positional information about the position of the predetermined mark on the predetermined scale visually presented on the display device such as a monitor or the physical medium such as paper, using the value of the formula calculated by the calculating part 102d1 or the converted value by the converting part 102d2 (the first value or the converted value of the first value may be used as well). The evaluating part 102d may store the positional information generated by the generating part 102d3 as the evaluation result in a predetermined region of the evaluation result file 106e.

The classifying part 102d4 classifies the individual into any one of the categories defined at least considering the degree of the risk of developing the metabolic disease after parturition, using the value of the formula calculated by the calculating part 102d1 or the converted value by the converting part 102d2 (the first value or the converted value of the first value may be used as well).

The result outputting part 102e outputs, into the output device 114, for example, the processing results in each processing part in the control device 102 (including the evaluation results obtained by the evaluating part 102d).

The sending part 102f transmits the evaluation results to the client apparatus 200 that is a sender of the non-blood data of the individual, and transmits the formulae prepared in the evaluating apparatus 100 and the evaluation results to the database apparatus 400.

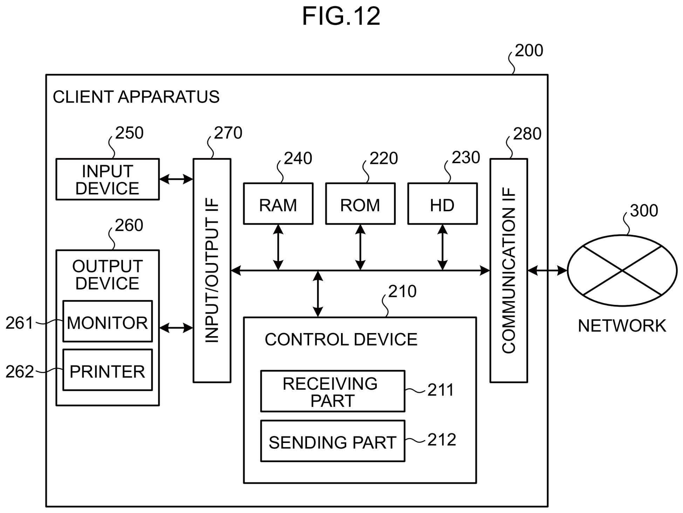

Hereinafter, a configuration of the client apparatus 200 in the present system will be described with reference to FIG. 12. FIG. 12 is a block diagram showing an example of the configuration of the client apparatus 200 in the present system, and only the part in the configuration relevant to the present invention is shown conceptually.

The client apparatus 200 includes a control device 210, ROM 220, a HD (Hard Disk) 230, a RAM 240, an input device 250, an output device 260, an input/output IF 270, and a communication IF 280 that are connected communicatively to one another through a communication channel. The client apparatus 200 may be realized based on an information processing apparatus (for example, an information processing terminal such as a known personal computer, a workstation, a family computer, Internet TV (Television), PHS (Personal Handyphone System) terminal, a mobile phone terminal, a mobile unit communication terminal, or PDA (Personal Digital Assistant)) connected as needed with peripheral devices such as a printer, a monitor, and an image scanner.

The input device 250 is, for example, a keyboard, a mouse, or a microphone. The monitor 261 described below also functions as a pointing device together with a mouse. The output device 260 is an output means for outputting information received via the communication IF 280, and includes the monitor 261 (including home television) and a printer 262. In addition, the output device 260 may have a speaker or the like additionally. The input/output IF 270 is connected to the input device 250 and the output device 260.

The communication IF 280 connects the client apparatus 200 to the network 300 (or communication apparatus such as a router) communicatively. In other words, the client apparatus 200 is connected to the network 300 via a communication apparatus such as a modem, TA (Terminal Adapter) or a router, and a telephone line, or via a private line. In this way, the client apparatus 200 can access to the evaluating apparatus 100 by using a particular protocol.

The control device 210 has a receiving part 211 and a sending part 212. The receiving part 211 receives various kinds of information such as the evaluation results transmitted from the evaluating apparatus 100, via the communication IF 280. The sending part 212 sends various kinds of information such as the non-blood data of the individual, via the communication IF 280, to the evaluating apparatus 100.

All or a part of processings of the control device 210 in the client apparatus 200 may be performed by CPU and programs read and executed by the CPU. Computer programs for giving instructions to the CPU and executing various processings together with the OS (Operating System) are recorded in the ROM 220 or HD 230. The computer programs, which are executed as they are loaded in the RAM 240, constitute the control device 210 with the CPU. The computer programs may be stored in application program servers connected via any network to the client apparatus 200, and the client apparatus 200 may download all or a part of them as needed. All or any part of processings of the control device 210 may be realized by hardware such as wired-logic.

The control device 210 may include an evaluating part 210a (including a calculating part 210a1, a converting part 210a2, a generating part 210a3, and a classifying part 210a4) having the same functions as the functions of the evaluating part 102d in the evaluating apparatus 100. When the control device 210 includes the evaluating part 210a, the evaluating part 210a may convert the value of the formula (the first value may be used as well) in the converting part 210a2, generate the positional information corresponding to the value of the formula or the converted value (the first value or the converted value of the first value may be used as well) in the generating part 210a3, and classify the individual into any one of the categories using the value of the formula or the converted value (the first value or the converted value of the first value may be used as well) in the classifying part 210a4, in accordance with information included in the evaluation result transmitted from the evaluating apparatus 100.

Hereinafter, the network 300 in the present system will be described with reference to FIGS. 3 and 4. The network 300 has a function to connect the evaluating apparatus 100, the client apparatuses 200, and the database apparatus 400 mutually, communicatively to one another, and is for example the Internet, an intranet, or LAN (Local Area Network (including both wired and wireless)). The network 300 may be VAN (Value Added Network), a personal computer communication network, a public telephone network (including both analog and digital), a leased line network (including both analog and digital), CATV (Community Antenna Television) network, a portable switched network or a portable packet-switched network (including IMT2000 (International Mobile Telecommunication 2000) system, GSM (registered trademark) (Global System for Mobile Communications) system, PDC (Personal Digital Cellular)/PDC-P system, and the like), a wireless calling network, a local wireless network such as Bluetooth (registered trademark), PHS network, a satellite communication network (including CS (Communication Satellite), BS (Broadcasting Satellite), ISDB (Integrated Services Digital Broadcasting), and the like), or the like.

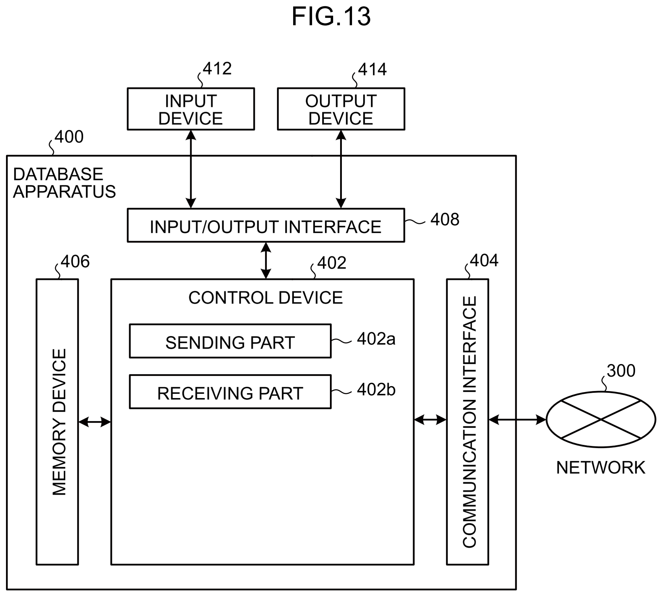

Hereinafter, the configuration of the database apparatus 400 in the present system will be described with reference to FIG. 13. FIG. 13 is a block diagram showing an example of the configuration of the database apparatus 400 in the present system, showing conceptually only the region relevant to the present invention.

The database apparatus 400 has functions to store, for example, the BHBA state information used in preparing the formulae in the evaluating apparatus 100 or the database apparatus, the evaluation formulae prepared in the evaluating apparatus 100, and the evaluation results obtained in the evaluating apparatus 100. As shown in FIG. 13, the database apparatus 400 includes (i) a control device 402, such as CPU, that integrally controls the database apparatus, (ii) a communication interface 404 connecting the database apparatus to the network 300 communicatively via communication apparatuses such as a router and wired or wireless communication circuits such as a private line, (iii) a memory device 406 storing various databases, tables, files, and others, and (iv) an input/output interface 408 connected to an input device 412 and an output device 414, and these parts are connected communicatively to each other via any communication channel.

The memory device 406 is a storage means, and, examples thereof include a memory apparatus such as RAM or ROM, a fixed disk drive such as a hard disk, a flexible disk, and an optical disk. The memory device 406 stores, for example, various programs used in various processings. The communication interface 404 allows communication between the database apparatus 400 and the network 300 (or a communication apparatus such as a router). Thus, the communication interface 404 has a function to communicate data via a communication line with other terminals. The input/output interface 408 is connected to the input device 412 and the output device 414. A monitor (including a home television), a speaker, or a printer may be used as the output device 414. A keyboard, a mouse, a microphone, or a monitor functioning as a pointing device together with a mouse may be used as the input device 412.

The control device 402 has an internal memory storing, for example, control programs such as OS (Operating System), programs for various processing procedures, and other needed data, and performs various information processings according to these programs. As shown in the figure, the control device 402 includes mainly a sending part 402a and a receiving part 402b. The sending part 402a transmits various kinds of information such as the BHBA state information and the formulae to the evaluating apparatus 100. The receiving part 402b receives various kinds of information such as the formulae and the evaluation results transmitted from the evaluating apparatus 100.

In the present description, the evaluating apparatus 100 executes the obtaining of the non-blood data, the calculation of the value of the formula, the classification of the individual into the category, and the transmission of the evaluation result, while the client apparatus 200 executes the reception of the evaluation result, described as an example. However, when the client apparatus 200 includes the evaluating part 210a, the evaluating apparatus 100 only has to execute the calculation of the value of the formula. For example, the conversion of the value of the formula, the generation of the positional information, and the classification of the individual into the category may be appropriately shared between the evaluating apparatus 100 and the client apparatus 200.

For example, when the client apparatus 200 receives the value of the formula from the evaluating apparatus 100, the evaluating part 210a may convert the value of the formula in the converting part 210a2, generate the positional information corresponding to the value of the formula or the converted value in the generating part 210a3, and classify the individual into any one of the categories using the value of the formula or the converted value in the classifying part 210a4.

When the client apparatus 200 receives the converted value from the evaluating apparatus 100, the evaluating part 210a may generate the positional information corresponding to the converted value in the generating part 210a3, and classify the individual into any one of the categories using the converted value in the classifying part 210a4.

When the client apparatus 200 receives the value of the formula or the converted value and the positional information from the evaluating apparatus 100, the evaluating part 210a may classify the individual into any one of the categories using the value of the formula or the converted value in the classifying part 210a4.

Although the system configuration of the second embodiment in the case where the primary screening is performed has been explained in this section [2-2], it can be incorporated in the system configuration of the second embodiment in the case where the secondary screening is performed by replacing "non-blood data" in this section [2-2] with "blood data" and replacing "first value" in this section [2-2] with "second value".

### 2-3. Other embodiments

In addition to the second embodiment described above, the evaluating apparatus, the evaluating method, the evaluating program, the evaluating system, and the information communication terminal apparatus according to the present invention can be practiced in various different embodiments within the technological scope of the claims.

Of the processings described in the second embodiment, all or a part of the processings described as automatically performed ones may be manually performed, or all or a part of the processings described as manually performed ones may be also automatically performed by known methods.

In addition, the processing procedures, the control procedures, the specific names, the information including parameters such as registered data of various processings and retrieval conditions, the screen examples, and the database configuration shown in the description and the drawings may be arbitrarily modified unless otherwise specified.

The components of the evaluating apparatus 100 shown in the figures are functionally conceptual and therefore not be physically configured as shown in the figures.

For example, for the operational functions provided in the evaluating apparatus 100, in particular, for the operational functions performed in the control device 102, all or part thereof may be implemented by the CPU (Central Processing Unit) and programs interpreted and executed in the CPU, or may be implemented by wired-logic hardware. The program is recorded in a non-transitory tangible computer-readable recording medium including programmed instructions for making an information processing apparatus execute the evaluating method according to the present invention, and is mechanically read as needed by the evaluating apparatus 100. More specifically, computer programs to give instructions to the CPU in cooperation with the OS (operating system) to perform various processes are recorded in the memory device 106 such as ROM or a HDD (hard disk drive). The computer programs are executed by being loaded to RAM, and form the control unit in cooperation with the CPU.

The computer programs may be stored in an application program server connected to the evaluating apparatus 100 via an arbitrary network, and all or part thereof can be downloaded as necessary.

The evaluating program according to the present invention may be stored in the non-transitory tangible computer-readable recording medium, or can be configured as a program product. The "recording medium" mentioned here includes any "portable physical medium" such as a memory card, a USB (universal serial bus) memory, an SD (secure digital) card, a flexible disk, a magneto-optical disc, ROM, EPROM (erasable programmable read only memory), EEPROM (registered trademark) (electronically erasable and programmable read only memory), CD-ROM (compact disc read only memory), MO (magneto-optical disk), DVD (digital versatile disc), and Blu-ray (registered trademark) Disc.

The "program" mentioned here is a data processing method described in an arbitrary language or description method, and therefore any form such as a source code and a binary code is acceptable. The "program" is not necessarily limited to a program configured as a single unit, and, therefore, includes those dispersively configured as a plurality of modules and libraries and those in which the function of the program is achieved in cooperation with separate programs represented as OS (operating system). Any known configuration and procedures can be used as a specific configuration and reading procedure to read a recording medium by each apparatus shown in the embodiments, an installation procedure after the reading, and the like.

The various databases and the like stored in the memory device 106 is a storage unit such as a memory device such as RAM and ROM, a fixed disk drive such as a hard disk, a flexible disk, or an optical disc. The memory device 106 stores various programs, tables, databases, files for Web (World Wide Web) pages, and the like used to perform various processes and to provide Web sites.

The evaluating apparatus 100 may be configured as an information processing apparatus such as known personal computer and work station, or may be configured as the information processing apparatus connected to an arbitrary peripheral device. The evaluating apparatus 100 may be provided by installing software (including the programs and the data, etc.) to cause the information processing apparatus to implement the evaluating method according to the present invention.

Furthermore, a specific configuration of dispersion or integration of the apparatuses is not limited to the shown one. The apparatuses can be configured by functionally or physically dispersing or integrating all or part of the apparatuses in arbitrary units according to various types of additions or the like or according to functional loads. In other words, the embodiments may be implemented in arbitrary combinations thereof or an embodiment may be selectively implemented.

### Example 1

In Example 1, it was confirmed that the state of postpartum metabolic disease can be evaluated by logistic regression equations using non-blood data.

Herd management data was obtained for a total of 399 female Holstein dairy cows (parous cows) on a general dairy farm. The herd management data included the following items as explanatory variables.

The explanatory variables include variables calculated for each parity of each cow and daily data recorded during the lactation periods after parturition.

The following three variables were used as the variables calculated for each parity of each cow.
- The parity of present parturition (if the parity number of present parturition is 2 or less, the parity of present parturition is set to "0", and if the parity number of present parturition is 3 or more, the parity of present parturition is set to "1")
- The number of milking days (up to 60 days before the present parturition)
- Calving interval

The following three explanatory variables were used as the variables of the daily data recorded during the postpartum lactation period. The daily data contains behavioral data such as foraging behavior and rumination time during a day for the cow. The behavioral data can be obtained from sensors.
- Milking volume
- Foraging time
- Rumination time

The mean and the standard deviation (variance) were calculated for each of the lactation periods for each of the three variables of the daily data. The calculated mean and standard deviation (variance) were used as explanatory variables. The lactation periods include four periods: fresh period (1 to 20 days after last parturition), early lactation period (21 to 80 days after last parturition), peak lactation period (81 to 180 days after last parturition), and late lactation period (181 days after last parturition to 60 days before present parturition).

The objective variable is whether the cow will develop ketosis after present parturition (1) or not (0).

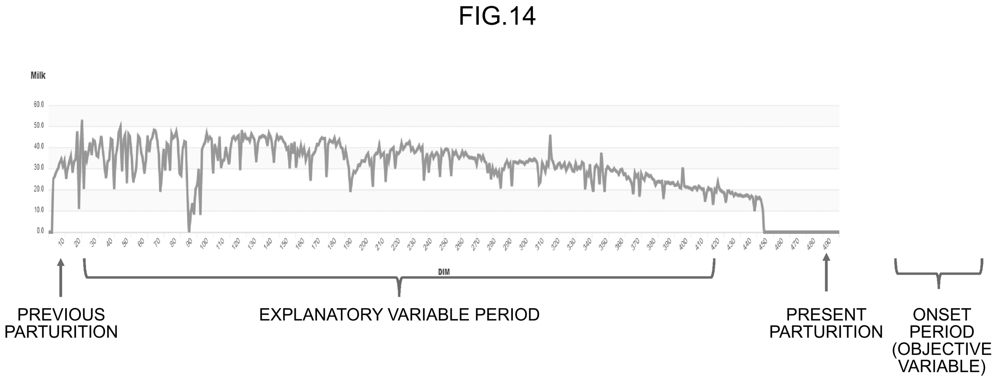

The time series of verification per parity cycle is shown in FIG. 14.

A total of 399 cows were classified into two groups, namely, a healthy group and a ketosis group, based on the presence or absence of postpartum ketosis. Then, an index that maximizes the discrimination ability for discriminating between the two groups was searched for by the logistic analysis using prepartum herd management data, and the searched formulae were evaluated using the AUC of the ROC curve.

Some of multiple features are not important for prediction and some are highly correlated with other features. Since such features may worsen the accuracy of prediction, the features shown in Table 1 below were selected to improve the accuracy of the logistic analysis equations. Specifically, as listed in Table 1 below, the variables ultimately employed in the equations were: parity, fresh period milking volume mean, early lactation period milking volume mean, peak lactation period milking volume mean, late lactation period milking volume mean, fresh period milking volume standard deviation, early lactation period milking volume standard deviation, peak lactation period milking volume standard deviation, and late lactation period milking volume standard deviation.

### [Table 1]

**[TABLE 1]**

| | MEAN | VARIANCE | MINIMUM | FIRST QUARTILE | MEDIAN | THIRD QUARTILE | MAXIMUM |
|---|---|---|---|---|---|---|---|
| PARITY | 2.12 | 1.36 | 1 | 1 | 2 | 3 | 8 |
| FRESH_MILKING VOLUME_mean | 32.9 | 8.8 | 5.5 | 26.9 | 32.7 | 39.3 | 63.6 |
| EARLY LACTATION_MILKING VOLUME_mean | 40.1 | 9.1 | 15.4 | 34.0 | 40.0 | 46.1 | 66.7 |
| PEAK LACTATION_MILKING VOLUME_mean | 38.5 | 7.8 | 16.0 | 33.4 | 38.3 | 44.1 | 68.5 |
| LATE LACTATION_MILKING VOLUME_mean | 30.3 | 6.1 | 5.2 | 26.4 | 30.4 | 34.4 | 47.4 |
| FRESH_MILKING VOLUME_std | 7.53 | 2.16 | 2.45 | 6.15 | 7.25 | 8.64 | 15.5 |
| EARLY LACTATION_MILKING VOLUME _std | 6.91 | 2.21 | 2.13 | 5.38 | 6.50 | 8.02 | 18.0 |
| PEAK LACTATION_MILKING VOLUME_std | 6.63 | 2.21 | 3.13 | 5.07 | 6.21 | 7.66 | 20.8 |
| LATE LACTATION_MILKING VOLUME_std | 7.12 | 2.12 | 0.54 | 5.60 | 6.92 | 8.37 | 15.7 |

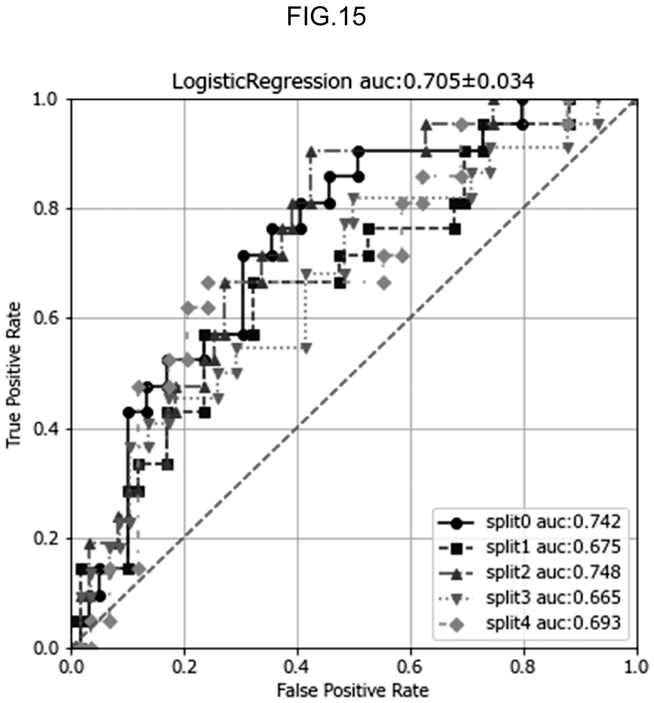

A cross-validation method that splits the data into five subsets was used as a method for verifying the accuracy of the generated logistic regression equations. The parameters (regression coefficients) of the logistic regression for each of the split data sets are shown in Table 2. The area under the ROC curve (ROC AUC) was used as an index of accuracy. The ROC and AUC scores obtained are shown in FIG. 15.

### [Table 2]

**[TABLE 2]**

| split | intercept | PARITY | FRESH_ MILKING VOLUME_mean | EARLY LACTATION_ MILKING VOLUME_mean | PEAK LACTATION_ MILKING VOLUME_mean | LATE LACTATION_ MILKING VOLUME_mean | FRESH_ MILKING VOLUME_std | EARLY LACTATION_ MILKING VOLUME_std | PEAK LACTATION_ MILKING VOLUME_std | LATE LACTATION_ MILKING VOLUME_std |
|---|---|---|---|---|---|---|---|---|---|---|
| 0 | 0.39218 | 0.06484 | 0.05090 | 0.01853 | -0.03274 | -0.11796 | 0.00279 | -0.14154 | 0.05039 | 0.18400 |
| 1 | 0.22291 | 0.16035 | 0.07476 | -0.03777 | -0.00071 | -0.12305 | -0.03363 | -0.11978 | 0.12205 | 0.18282 |
| 2 | 0.56424 | 0.09611 | 0.04531 | 0.01346 | -0.04268 | -0.11034 | -0.04110 | -0.10000 | 0.01018 | 0.27593 |
| 3 | 0.68981 | 0.04225 | 0.06876 | -0.01589 | -0.02624 | -0.12759 | -0.00502 | -0.13473 | 0.06234 | 0.25369 |
| 4 | 1.10592 | 0.16549 | 0.03027 | -0.02529 | 0.01357 | -0.14235 | -0.03068 | -0.12991 | 0.09601 | 0.23449 |

As shown in FIG. 15, the ROC_AUC was as high as 0.665 to 0.748. Based on this, it was found that the state of postpartum metabolic disease can be evaluated by logistic regression equations using non-blood data.

### Example 2

In Example 2, it was confirmed that the state of postpartum metabolic disease can be evaluated by logistic regression equations using non-blood data (behavioral data) excluding milking volume. In Example 2, the same method as in Example 1 was used for verification, but milking volume was not used as an explanatory variable.

Some of multiple features are not important for prediction and some are highly correlated with other features. Since such features may worsen the accuracy of prediction, the features shown in Table 3 below were selected to improve the accuracy of the logistic analysis equations. Specifically, as listed in Table 3 below, the variables ultimately employed in the equation were: parity, fresh period rumination time mean, early lactation period rumination time mean, peak lactation period rumination time mean, late lactation period rumination time mean, fresh period rumination time standard deviation, early lactation period rumination time standard deviation, peak lactation period rumination time standard deviation, and late lactation period rumination time standard deviation.

### [Table 3]

**[TABLE 3]**

| | MEAN | VARIANCE | MINIMUM | FIRST QUARTILE | MEDIAN | THIRD QUARTILE | MAXIMUM |
|---|---|---|---|---|---|---|---|
| PARITY | 2.12 | 1.36 | 1 | 1 | 2 | 3 | 8 |
| FRESH_RUMINATION_mean | 346 | 101 | 0 | 293 | 352 | 420 | 583 |
| EARLY LACTATION_RUMINATION_mean | 379 | 105 | 0 | 328 | 390 | 449 | 645 |
| PEAK LACTATION_RUMINATION_mean | 396 | 87 | 29 | 359 | 404 | 453 | 572 |
| LATE LACTATION_RUMINATION_mean | 412 | 61 | 74 | 377 | 412 | 451 | 584 |
| FRESH_RUMINATION_std | 80 | 23 | 0 | 65 | 77 | 92 | 185 |
| EARLY LACTATION_RUMINATION_std | 72 | 22 | 0 | 60 | 68 | 78 | 236 |
| PEAK LACTATION_RUMINATION_std | 73 | 25 | 28 | 58 | 66 | 78 | 236 |
| LATE LACTATION_RUMINATION_std | 81 | 20 | 48 | 67 | 77 | 89 | 198 |

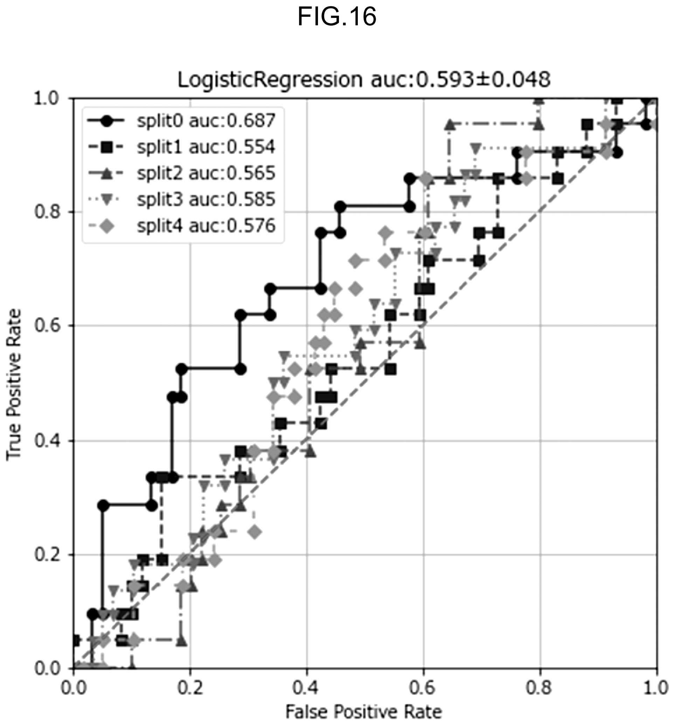

A cross-validation method that splits the data into five subsets was used as a method for verifying the accuracy of the generated logistic regression equations. The parameters (regression coefficients) of the logistic regression for each of the split data sets are shown in Table 4. The area under the curve of the ROC curve was used as an index of accuracy. The ROC and AUC scores obtained are shown in FIG. 16.

### [Table 4]

**[TABLE 4]**

| split | intercept | PARITY | FRESH_ RUMINATION**_** mean | EARLY LACTATION_ RUMINATION_ mean | PEAK LACTATION_ RUMINATION_ mean | LATE LACTATION_ RUMINATION_ mean | FRESH_ RUMINATION_ std | EARLY LACTATION_ RUMINATION_ std | PEAK LACTATION_ RUMINATION_ std | LATE LACTATION_ RUMINATION_ std |
|---|---|---|---|---|---|---|---|---|---|---|
| 0 | -0.00707 | 0.211625 | 0.00141 | -0.00143 | -0.00082 | -0.00225 | -0.00597 | 0.002131 | -0.00443 | 0.00577 |
| 1 | -0.00781 | 0.297617 | -0.00013 | 0.001153 | -0.00329 | -0.00142 | -0.00247 | 0.004519 | -0.00915 | 0.004326 |
| 2 | -0.00048 | 0.240722 | 0.000427 | 0.000331 | -0.00191 | -0.00286 | -0.00211 | 0.006809 | -0.00847 | 0.004725 |
| 3 | 0.001686 | 0.202887 | 0.00015 | 0.001705 | -0.0039 | -0.00232 | 0.000524 | 0.007564 | -0.00495 | 0.001054 |
| 4 | -0.00761 | 0.326024 | 0.000722 | -0.00176 | -0.00046 | -0.00083 | -0.00988 | 0.004269 | -0.00855 | 0.003832 |

As shown in FIG. 16, the ROC_AUC was as high as 0.554 to 0.687. Based on this, it was found that the state of postpartum metabolic disease can be evaluated by logistic regression equations using non-blood data (behavioral data) without milking volume.

### Example 3

In Example 3, it was confirmed that the state of metabolic disease can be evaluated by decision trees using non-blood data. In Example 3, the same cows, explanatory variables, and objective variables as in Example 1 were used, unless otherwise explained.

In Example 3, it was confirmed that the state of postpartum metabolic disease can be evaluated by the generated decision trees for three patterns: (1) a case where milk yield data is used as an explanatory variable, (2) a case where behavioral data (rumination time) is used as an explanatory variable in addition to milk yield data, and (3) a case where foraging time is used as an explanatory variable in addition to milk yield data.

### (1) The case where milk yield data is used as an explanatory variable

A total of 399 cows were classified into two groups, namely, a healthy group (334 cows) and a ketosis group (65 cows), based on the presence or absence of postpartum ketosis. Then, a decision tree that maximized the discrimination ability for discriminating between the two groups was generated using the prepartum herd management data. In this case, the maximum node depth was specified as 6 and the minimum number of cows as 15.

The explanatory variables used were: parity, fresh period milking volume mean, early lactation period milking volume mean, peak lactation period milking volume mean, late lactation period milking volume mean, fresh period milking volume standard deviation, early lactation period milking volume standard deviation, peak lactation period milking volume standard deviation, and late lactation period milking volume standard deviation.

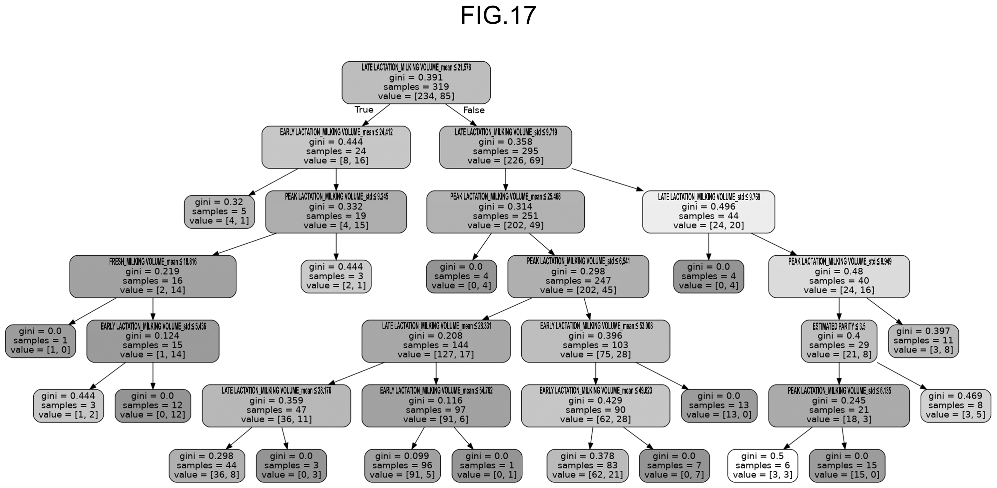

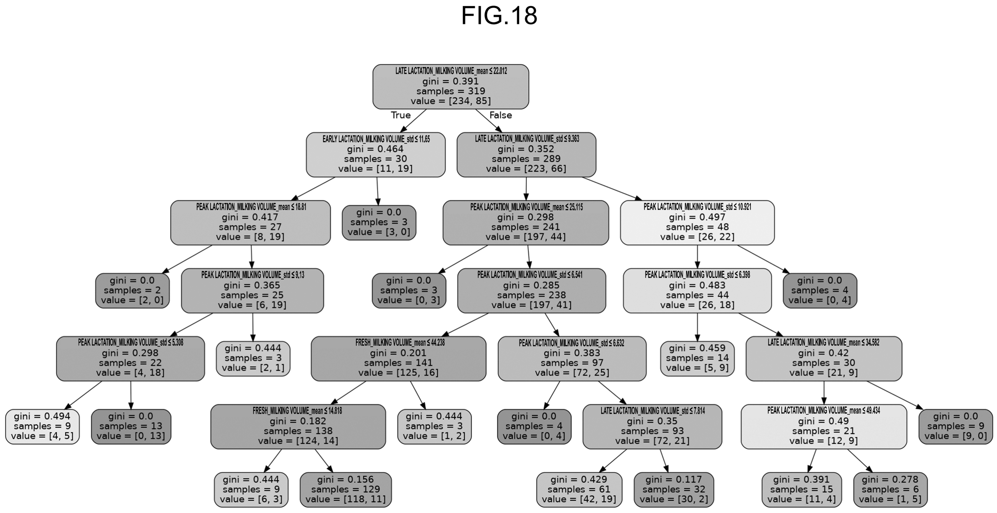

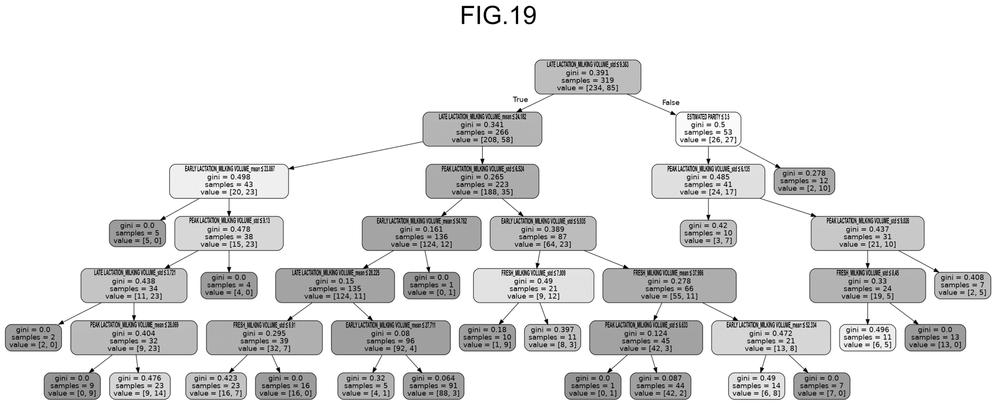

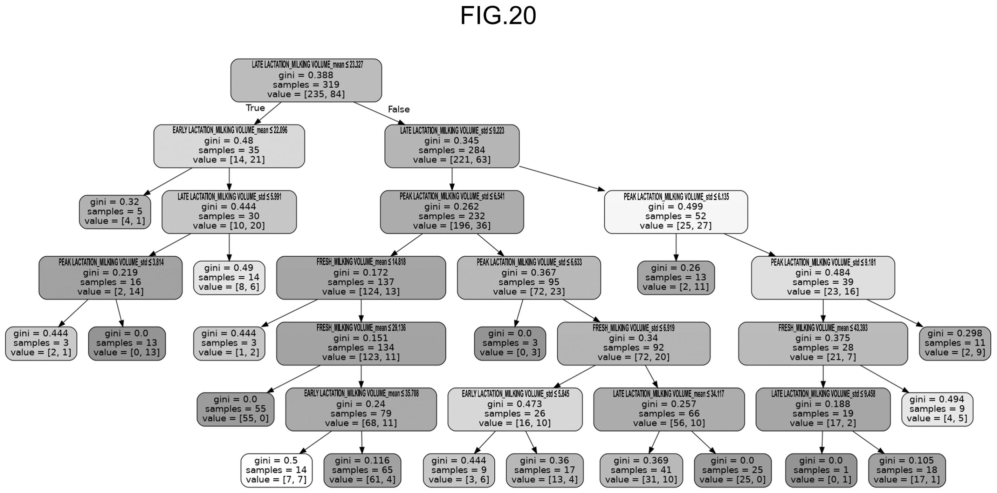

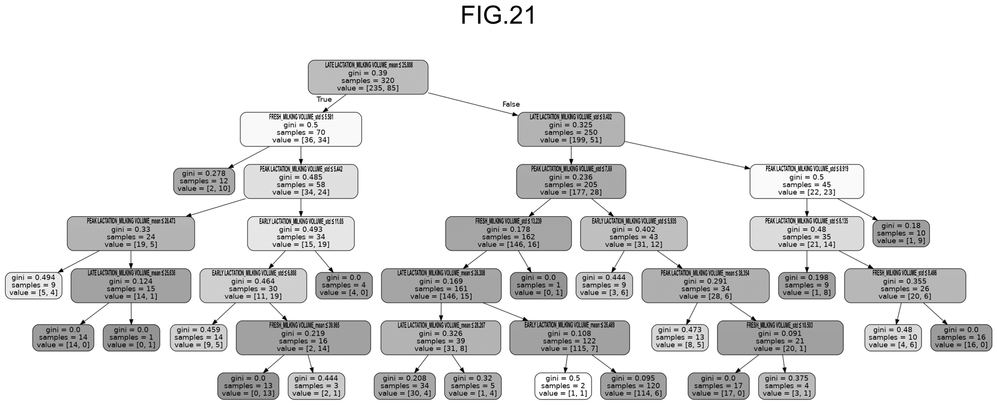

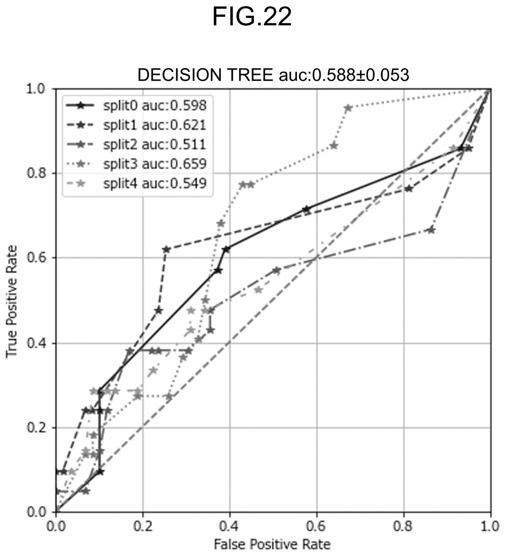

A cross-validation method that splits the data into five sets was used as a method for verifying the accuracy of the generated decision tree. The five decision trees generated are shown in FIGS. 17 to 21. The area under the curve of the ROC curve was used as an index of accuracy. The ROC and AUC scores obtained are shown in FIG. 22.

As shown in FIG. 22, the ROC_AUC was as high as 0.511 to 0.659. Based on this, it was found that the state of postpartum metabolic disease can be evaluated by decision trees using milk yield data.

### (2) The case where behavioral data (rumination time) is used as an explanatory variable in addition to milk yield data

A decision tree was generated in the same manner as in (1), except that behavioral data (rumination time) was used as an explanatory variable in addition to milk yield data.

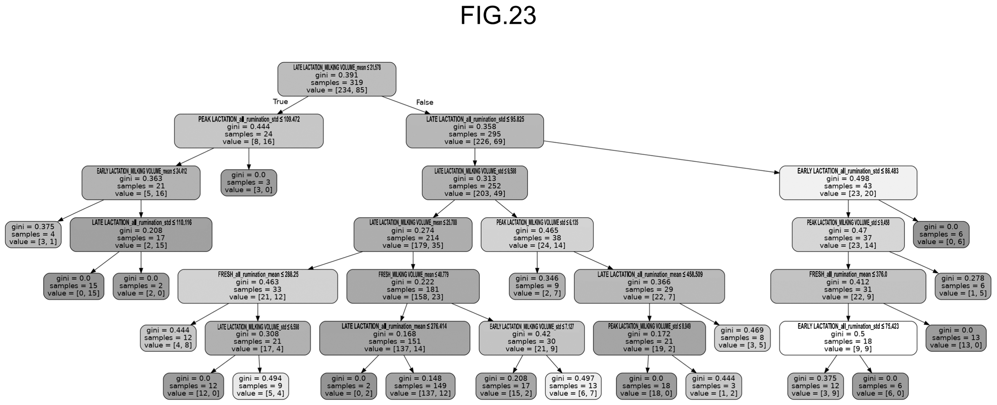

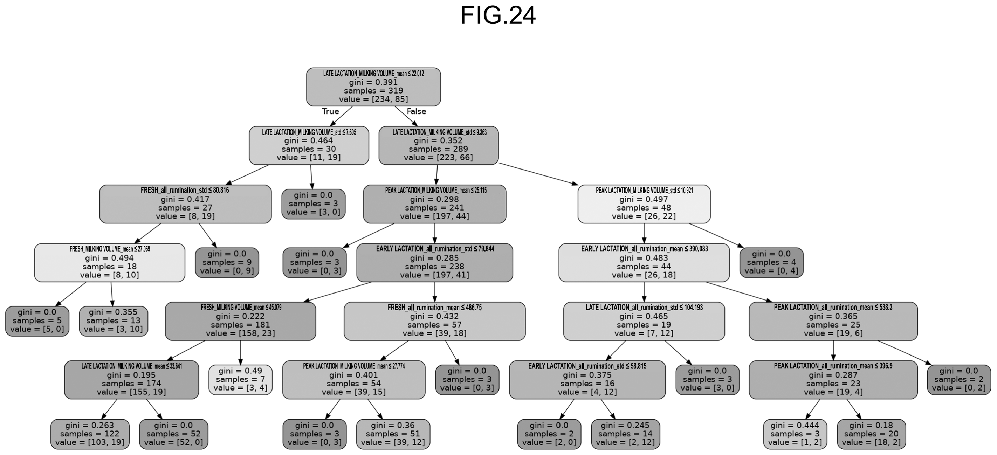

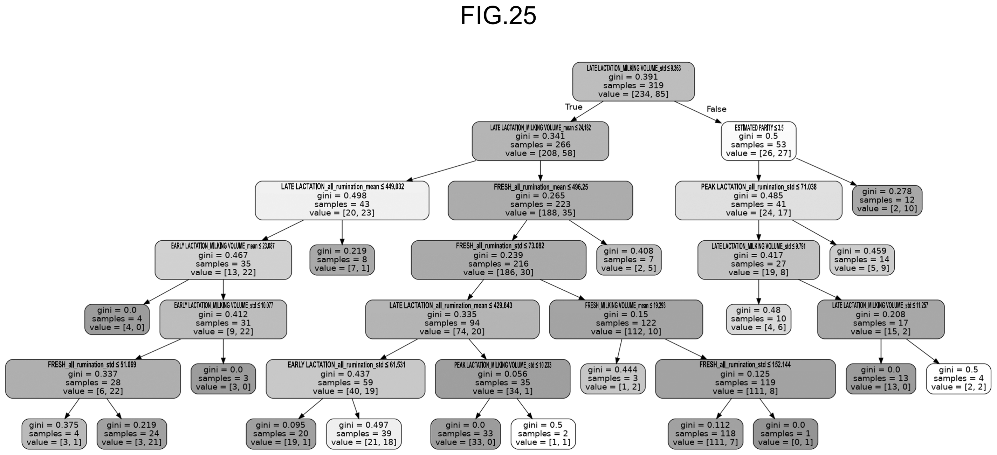

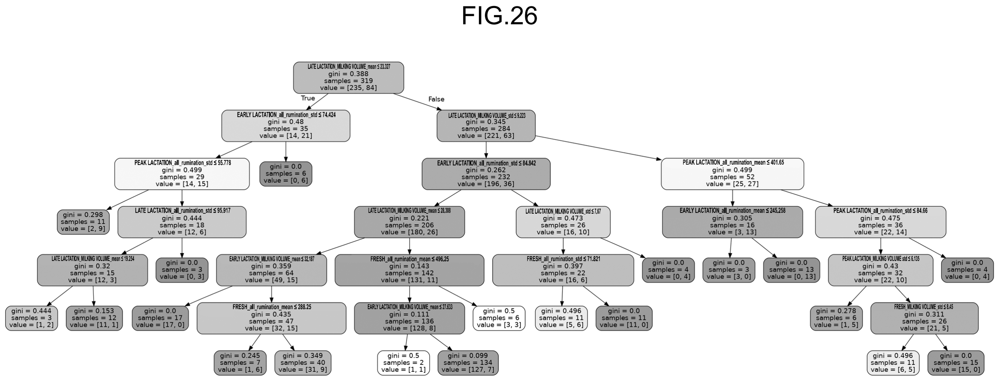

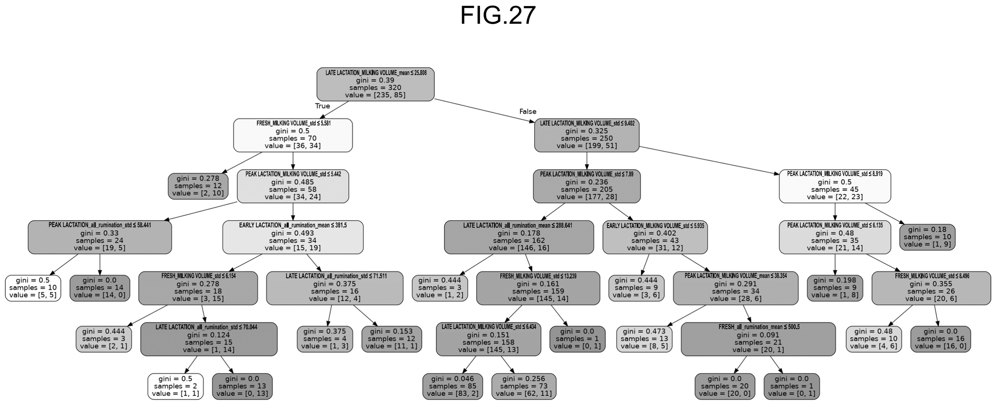

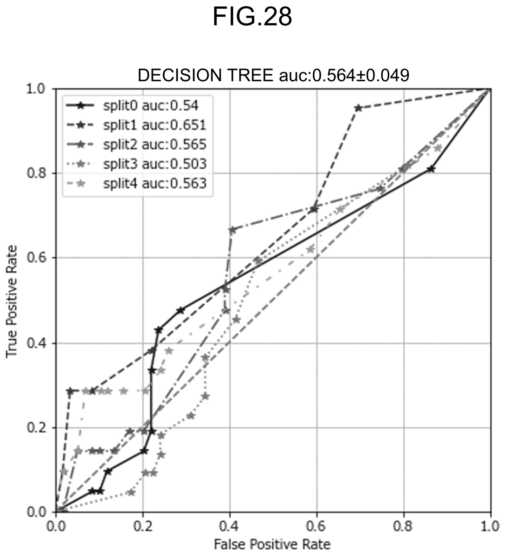

A cross-validation method that splits the data into five sets was used as a method for verifying the accuracy of the generated decision tree. The five decision trees generated are shown in FIGS. 23 to 27. The area under the curve of the ROC curve was used as an index of accuracy. The ROC and AUC scores obtained are shown in FIG. 28.

As shown in FIG. 28, the ROC_AUC was as high as 0.503 to 0.651. Based on this, it was found that the state of postpartum metabolic disease can be evaluated by decision trees using behavioral data (rumination time) in addition to milk yield data.

### (3) The case where foraging time is used as an explanatory variable in addition to milk yield data

A decision tree was generated in the same manner as in (1), except that foraging time was used as an explanatory variable in addition to milk yield data.

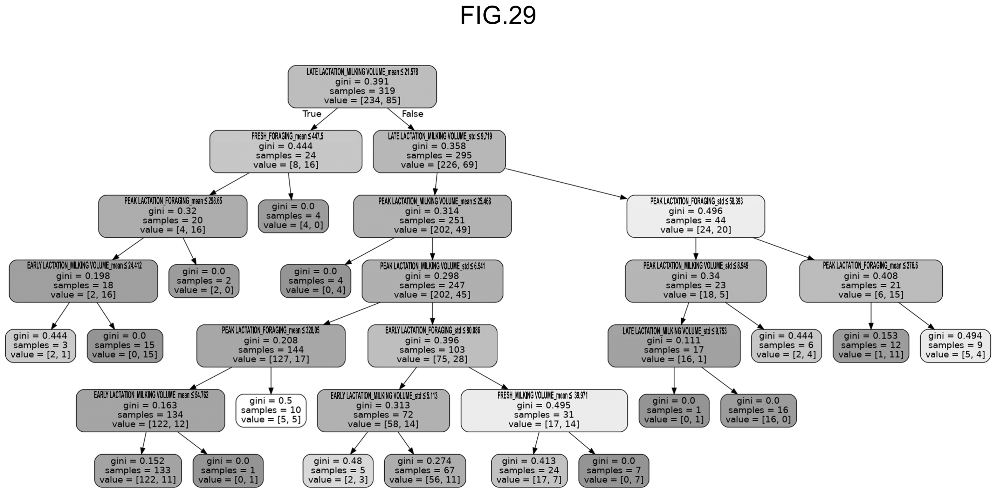

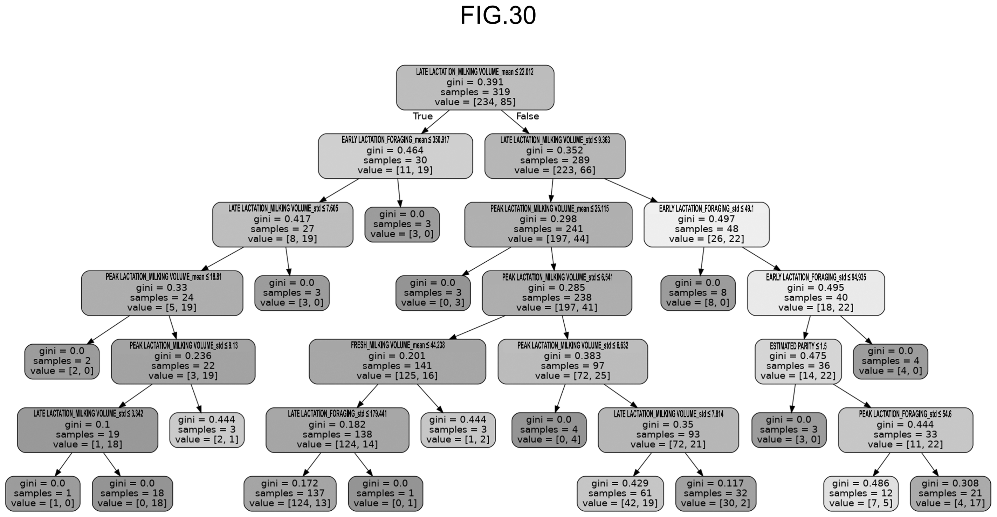

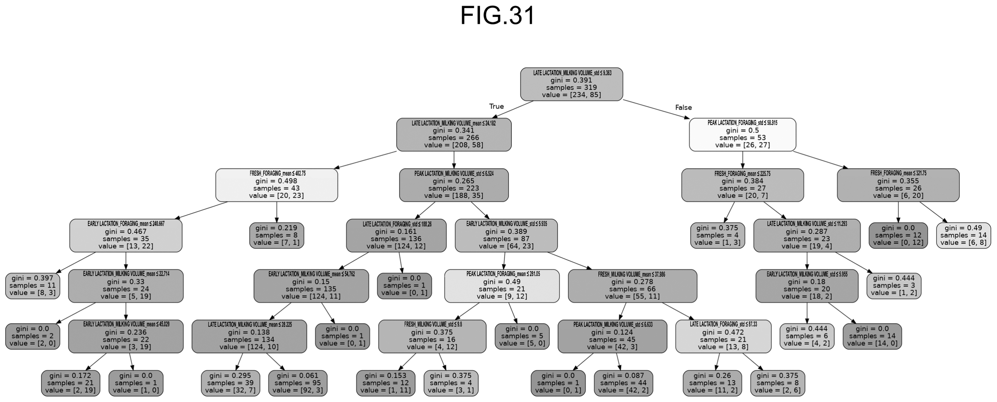

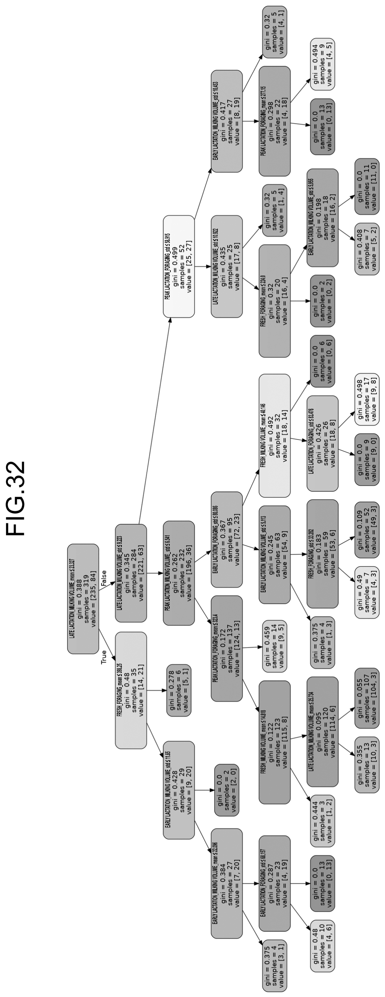

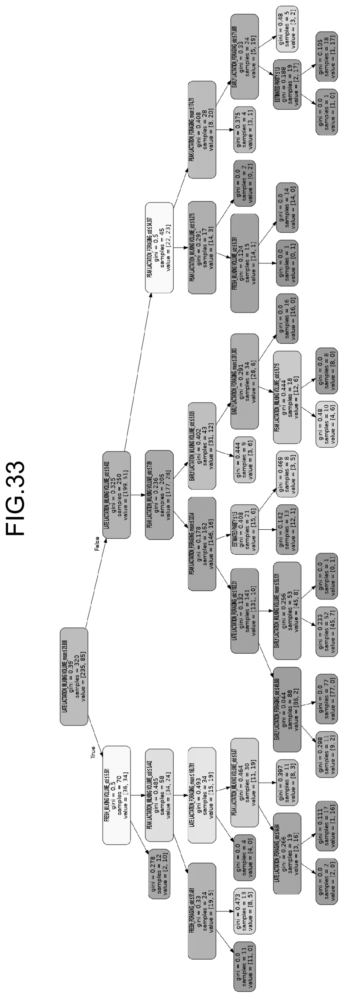

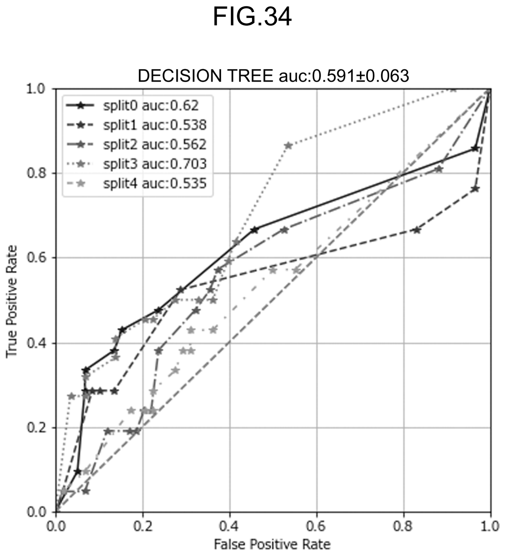

A cross-validation method that splits the data into five sets was used as a method for verifying the accuracy of the generated decision tree. The five decision trees generated are shown in FIGS. 29 to 33. The area under the curve of the ROC curve was used as an index of accuracy. The ROC and AUC scores obtained are shown in FIG. 34.

As shown in FIG. 34, the ROC_AUC was as high as 0.535 to 0.703. Based on this, it was found that the state of postpartum metabolic disease can be evaluated by decision trees using foraging time in addition to milk yield data.

### Example 4

In Example 4, it was confirmed that the state of postpartum metabolic disease can be evaluated by logistic regression equations using non-blood data.

Herd management data was obtained for a total of 4460 female Holstein dairy cows (parous cows) on general dairy farms (three farms in total). The herd management data contained daily milk yield, parity, number of days of calving interval, and postpartum ketosis record as prepartum explanatory variables.

Out of a total of 4460 cows, 3568 randomly selected cows were used as training data and the remaining 892 cows were used as verification data. The cows were classified into two groups, namely, a healthy group (3524 cows) and a ketosis group (44 cows), based on the presence or absence of postpartum ketosis. Then, using the training data, a model (logistic regression equation) discriminating between these two groups was estimated by logistic regression using the parity and the number of days of calving interval as explanatory variables.

The estimated model was fitted to the verification data consisting of a healthy group (875 cows) and a ketosis group (17 cows), and the discrimination ability in the verification data was evaluated by the area under the ROC curve. As a result, the ROC_AUC was as high as 0.716. Based on this, it was found that the state of postpartum metabolic disease can be evaluated by logistic regression equations using non-blood data.

### Example 5

In Example 5, it was confirmed that the state of postpartum metabolic disease can be evaluated by convolutional neural networks (CNNs) using non-blood data.

In Example 5, the same herd management data for 4460 female Holstein dairy cows as in Example 4 was used. For the healthy and ketosis groups, the number of days after parturition in the previous parity was plotted on the X-axis and the daily milk yield on the Y-axis, and ranges on the X and Y axes were set. The plot was saved as image data (png format), and the image data was then converted to three-dimensional tensor data using an image analysis program.

The 4460 cows were randomly divided into 3032 for training data, 536 for validation data, and 892 for verification data. Then, using the tensor data obtained from plots corresponding to the 3032 individuals for training data and the 536 individuals for validation data, a discrimination model was constructed to discriminate between the healthy group and the ketosis group by a convolutional neural network (CNN). The explanatory variable used in the discrimination model is not limited to milk yield and may be any information obtained on a daily basis (weight, etc.), and any range of days after parturition can be set.

Then, using the tensor data obtained from the plots corresponding to the 892 individuals for verification data, a prediction score was obtained for each individual having ketosis by the constructed discrimination model. As a result, the ROC_AUC was as high as 0.810. Based on this, it was found that the state of postpartum metabolic disease can be evaluated by convolutional neural networks (CNNs) using non-blood data.

### Example 6

In Example 6, it was confirmed that the state of postpartum metabolic disease can be evaluated by convolutional neural networks (CNNs) and logistic regression equations using non-blood data.

In addition to the prediction score for each individual having ketosis for a total of 3568 cows used as training and validation data in Example 5, the parity and the number of days after parturition for the 3568 cows used as training data in Example 4 were also used as explanatory variables to estimate a model (logistic regression equation) for discriminating between the healthy group and the ketosis group by logistic regression.

Then, the parity and the number of days of calving interval obtained in Example 4 as well as the prediction scores obtained in Example 5 from the herd management data of the female Holstein dairy cows for the 892 cows used as the verification data in Examples 4 and 5 were fitted to the estimated model, and the discrimination ability in the verification data was evaluated by the area under the curve of the ROC curve. As a result, the ROC_AUC was as high as 0.811. Based on this, it was found that the state of postpartum metabolic disease can be evaluated by convolutional neural networks (CNN) and logistic regression equations using non-blood data.

### Example 7

### Verification 1

A ketosis prediction equation using a convolutional neural network (CNN) and a ketosis prediction equation using Inception (CNN) were prepared.

Herd management data was obtained for a total of 4815 female Holstein dairy cows (parous cows) on general dairy farms (seven farms in total). The herd management data contained daily milk yield, parity, number of days of calving interval, and postpartum ketosis record as prepartum explanatory variables. For the healthy and ketosis groups, the number of days after parturition in the previous parity was plotted on the X-axis and the daily milk yield on the Y-axis, and ranges on the X and Y axes were set for all data. The plot was saved as an image file (png format), and the image data was then converted to three-dimensional tensor data by an image analysis program.

Using the tensor data obtained from plots corresponding to 3721 individuals from one farm for training data out of the 4815 cows, a discrimination model was constructed to discriminate between the healthy group and the ketosis group by a convolutional neural network (CNN). The explanatory variable used in the discrimination model is not limited to milk yield and may be any information obtained on a daily basis (weight, etc.), and any range of days after parturition can be set.

The three-dimensional tensor data based on the "plot with the number of days after parturition in the previous parity on the X-axis and the daily milk yield on the Y-axis" corresponding to each of 1094 individuals from six farms (data obtained by the same process as above from the herd management data for the 1094 female Holstein dairy cows) was used as verification data, and a prediction score for each individual having ketosis was obtained by the constructed discrimination model. As a result, the ROC_AUC for CNN was 0.557 and the ROC_AUC for Inception was 0.62 for the new data.

### Verification 2

A ketosis prediction equation using CNN and logistic regression and a ketosis prediction equation using Inception (CNN) and logistic regression were prepared.

Using the ketosis prediction score for the 3721 individuals for training data obtained in verification 1 and the parity and the number of days after parturition included in the herd management data as explanatory variables, a model discriminating between two groups: the healthy group and the ketosis group was estimated by logistic regression.

The parity and the number of days of calving interval included in the herd management data for the 1094 female Holstein dairy cows and the ketosis prediction score obtained in verification 1 were fitted as verification data to the estimated logistic regression model, and the discrimination ability of the model was evaluated by ROC_AUC. As a result, the ROC_AUC for CNN was 0.654 and the ROC_AUC for Inception was 0.688 for the new data.

### Verification 3

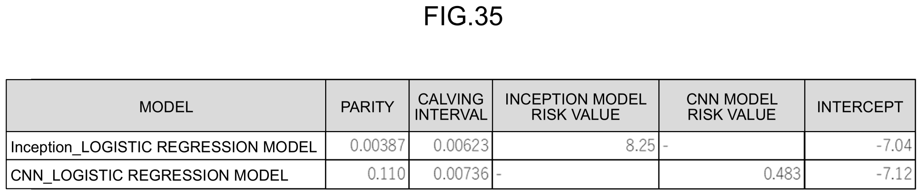

In verifications 1 and 2, four equations that can predict ketosis were constructed. Inception is a type of CNN. The coefficients of each equation are shown in FIG. 35. For the daily milk yield in the previous parity, in this example, 10-day moving average daily milk yield, which is the average of time-series daily milk yield data for 10 days, was used to eliminate irregular variations and missing data. The scores were then calculated using the constructed equations using data from a farm different from the farm on which the equations were constructed to verify the accuracy of predicting postpartum metabolic disease and inflammation-related factors.

Information in the previous parity and haptoglobin in a blood sample taken seven days after parturition were obtained from each of 37 female Holstein dairy cows (all parous cows) on a Japanese dairy farm. The disease onset of each of the 37 dairy cows was also recorded up to 21 days after parturition. The "parity", "daily milk yield in the previous parity (10-day moving average)", and "calving interval information" were fitted to the four models (CNN model, Inception model, CNN_logistic regression model, and Inception_logistic regression model) prepared in verifications 1 and 2 to calculate the scores.

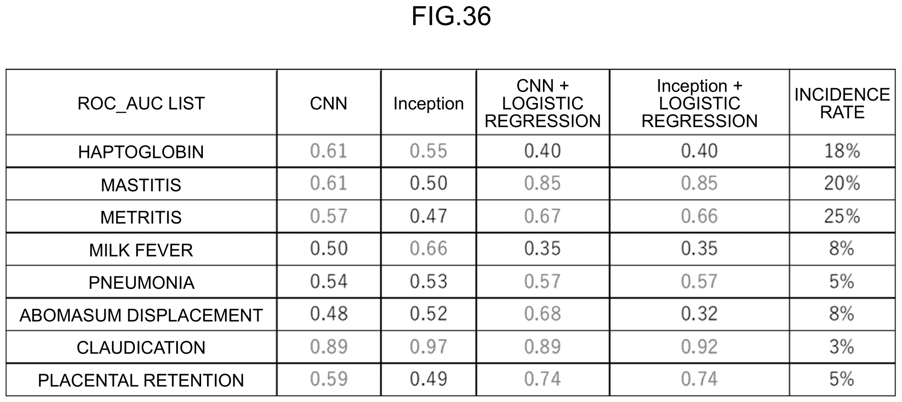

The scores calculated from the four models were used to predict the level of haptoglobin (reference 800 µg/mL) after parturition, and the prediction accuracy was evaluated by ROC_AUC. For seven diseases (mastitis, metritis, milk fever, pneumonia, abomasum displacement, claudication, and placental retention), the prepared four models were used to predict the presence or absence of development of each disease after parturition, and the prediction accuracy was evaluated by ROC_AUC. The ROC_AUC results are shown in FIG. 36. For the prediction accuracy of haptoglobin, two models showed a ROC_AUC of 0.55 or higher, suggesting that the two models are useful for predicting the level of haptoglobin. For the prediction accuracy of each disease, at least one model showed a ROC_AUC of 0.55 or higher, suggesting that the model with a ROC_AUC of 0.55 or higher is useful for predicting the development of each disease after parturition.

### Example 8

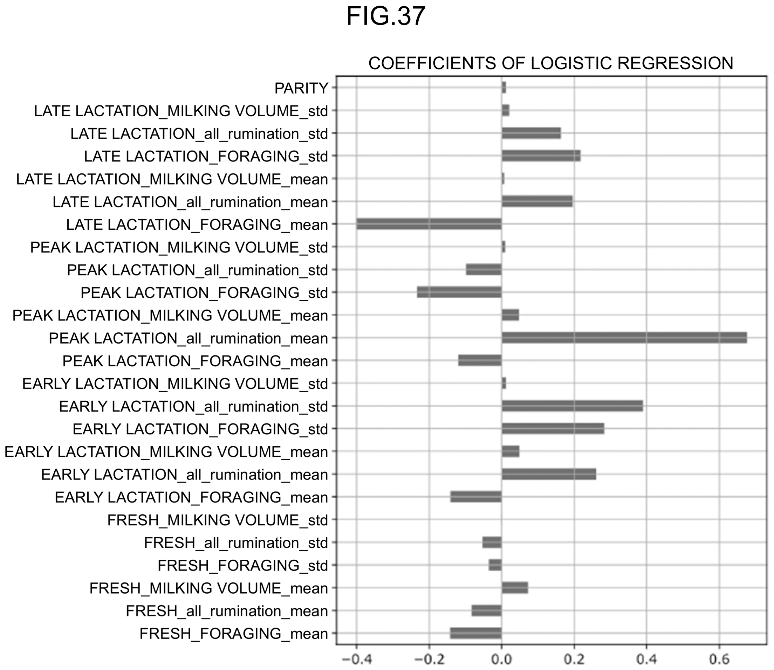

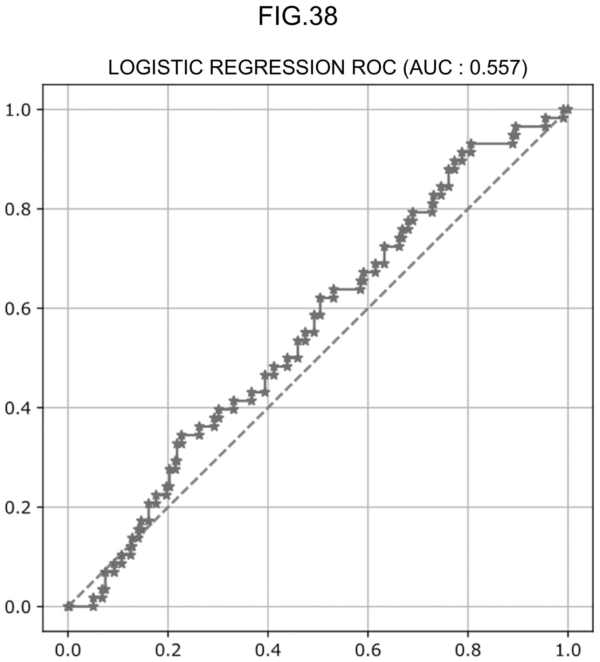

The following information in the previous parity was obtained from each of 442 female Holstein dairy cows (all parous cows) on a Japanese farm. When beef cows are used, they are classified into three periods: "immediately after parturition to peak period", "peak to weaning period", and "post-weaning period". A prediction equation for predicting the presence or absence of development of postpartum ketosis was prepared using logistic regression, with the information in the previous parity listed below as explanatory variables. As the result, the ROC_AUC was 0.557, confirming that it is possible to predict the presence or absence of development of postpartum ketosis using all explanatory variables (see FIGS. 37 and 38).
- Parity
- Fresh period foraging mean (fresh_foraging_mean), early lactation period foraging mean (early lactation_foraging_mean), peak lactation period foraging mean (peak lactation_foraging_mean), and late lactation period foraging mean (late lactation_foraging_mean)
- Fresh period all rumination time mean (fresh_all_rumination_mean), early lactation period all rumination time mean (early lactation_all_rumination_mean), peak lactation period all rumination time mean (peak lactation_all_rumination_mean), late lactation period all rumination time mean (late lactation_all_rumination_mean)
- Fresh period milk yield sufficiency rate mean (fresh_milk yield sufficiency_mean), early lactation period milk yield sufficiency rate mean (early lactation_milk yield sufficiency_mean), peak lactation period milk yield sufficiency rate mean (peak lactation_milk yield sufficiency_mean), late lactation period milk yield sufficiency rate mean (late lactation_milk yield sufficiency_mean)
- Fresh period DMI sufficiency rate mean (fresh_DMI sufficiency_mean), early lactation period DMI sufficiency rate mean (early lactation_DMI sufficiency_mean), peak lactation period DMI sufficiency rate mean (peak lactation_DMI sufficiency_mean), late lactation period DMI sufficiency rate mean (late lactation_DMI sufficiency_mean)
- Fresh period ME sufficiency rate mean (fresh_ME sufficiency_mean), early lactation period ME sufficiency rate mean (early lactation_ME sufficiency_mean), peak lactation period ME sufficiency rate mean (peak lactation_ME sufficiency_mean), late lactation period ME sufficiency rate mean (late lactation_ME sufficiency_mean)
- Fresh period MP sufficiency rate mean (fresh_MP sufficiency_mean), early lactation period MP sufficiency rate mean (early lactation_MP sufficiency_mean), peak lactation period MP sufficiency rate mean (peak lactation_MP sufficiency_mean), late lactation period MP sufficiency rate mean (late lactation_MP sufficiency_mean)
- Fresh period milking volume mean (fresh_milking volume_mean), early lactation period milking volume mean (early lactation_milking volume_mean), peak lactation period milking volume mean (peak lactation_milking volume_mean), late lactation period milking volume mean (late lactation_milking volume_mean)
- Fresh period foraging standard deviation (fresh_foraging_std), early lactation period foraging standard deviation (early lactation_foraging_std), peak lactation period foraging standard deviation (peak lactation_foraging_std), late lactation period foraging standard deviation (late lactation_foraging_std)
- Fresh period all rumination time standard deviation (fresh_all_rumination_std), early lactation period all rumination time standard deviation (early lactation_all_rumination_std), peak lactation period all rumination time standard deviation (early lactation_all_rumination_std), late lactation period all rumination time standard deviation (late lactation_all_rumination_std)
- Fresh period milk yield sufficiency rate standard deviation (fresh_milk yield sufficiency_std), early lactation period milk yield sufficiency rate standard deviation (early lactation_milk yield sufficiency_std), peak lactation period milk yield sufficiency rate standard deviation (peak lactation_milk yield sufficiency_std), late lactation period milk yield sufficiency rate standard deviation (late lactation_milk yield sufficiency_std)
- Fresh period DMI sufficiency rate standard deviation (fresh_DMI sufficiency_std), early lactation period DMI sufficiency rate standard deviation (early lactation_DMI sufficiency_std), peak lactation period DMI sufficiency rate standard deviation (peak lactation_DMI sufficiency_std), late lactation period DMI sufficiency rate standard deviation (late lactation_DMI sufficiency_std)
- Fresh period ME sufficiency rate standard deviation (fresh_ME sufficiency_std), early lactation period ME sufficiency rate standard deviation (early lactation_ME sufficiency_std), peak lactation period ME sufficiency rate standard deviation (peak lactation_ME sufficiency_std), late lactation period ME sufficiency rate standard deviation (late lactation_ME sufficiency_std)
- Fresh period MP sufficiency rate standard deviation (fresh_MP sufficiency_std), early lactation period MP sufficiency rate standard deviation (early lactation_MP sufficiency_std), peak lactation period MP sufficiency rate standard deviation (peak lactation_MP sufficiency_std), late lactation period MP sufficiency rate standard deviation (late lactation_MP sufficiency_std)
- Fresh period milking volume standard deviation (fresh_milking volume_std), early lactation period milking volume standard deviation (early lactation_milking volume_std), peak lactation period milking volume standard deviation (peak lactation_milking volume_std), late lactation period milking volume standard deviation (late lactation_milking volume_std)

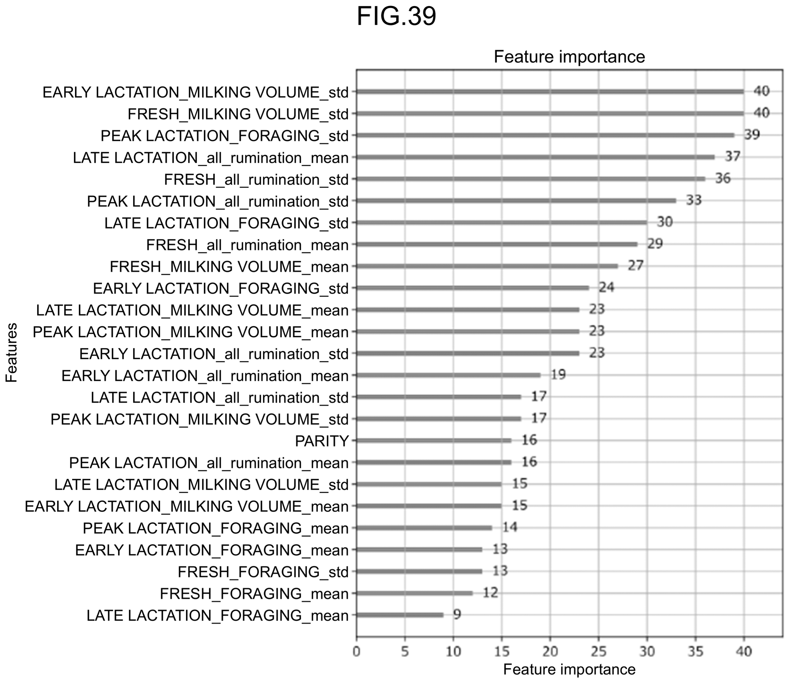

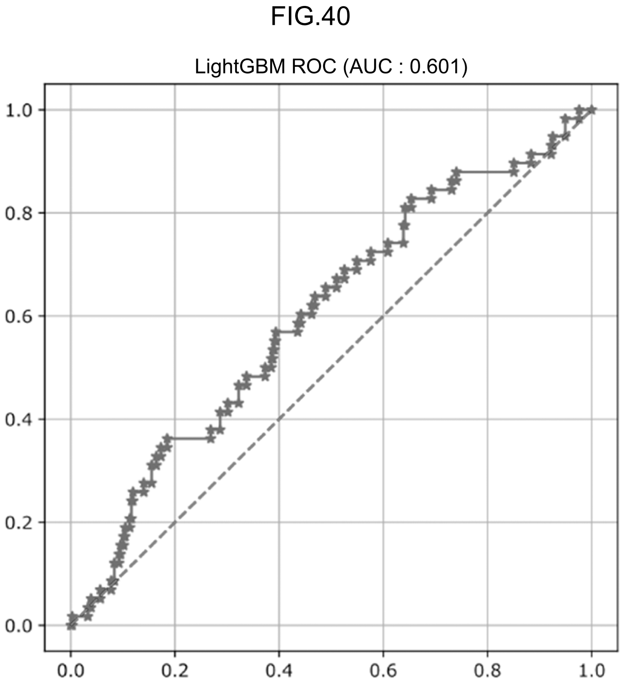

Using the same data set, whether a model different from logistic regression could predict the presence or absence of development of postpartum ketosis was verified. A model predicting the presence or absence of development of postpartum ketosis was prepared using LightGBM with all of the information in the previous parity listed above as explanatory variables. As the result, the ROC_AUC was 0.601, indicating that the model using LightGBM has higher accuracy than logistic regression (see FIGS. 39 and 40).

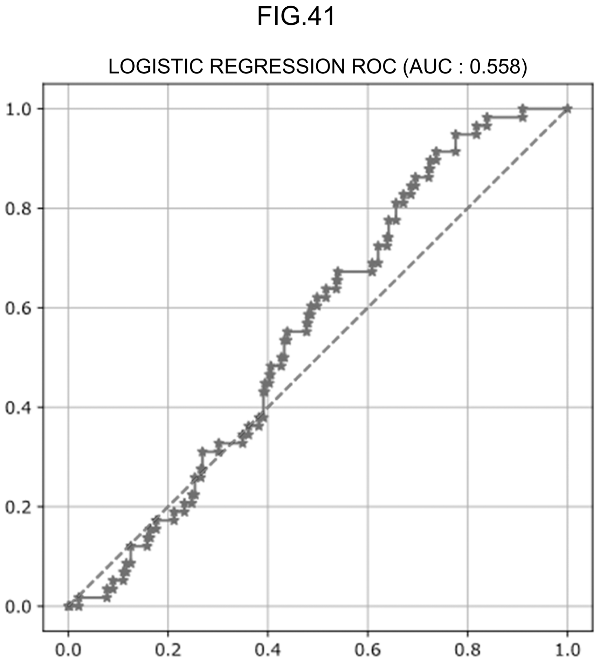

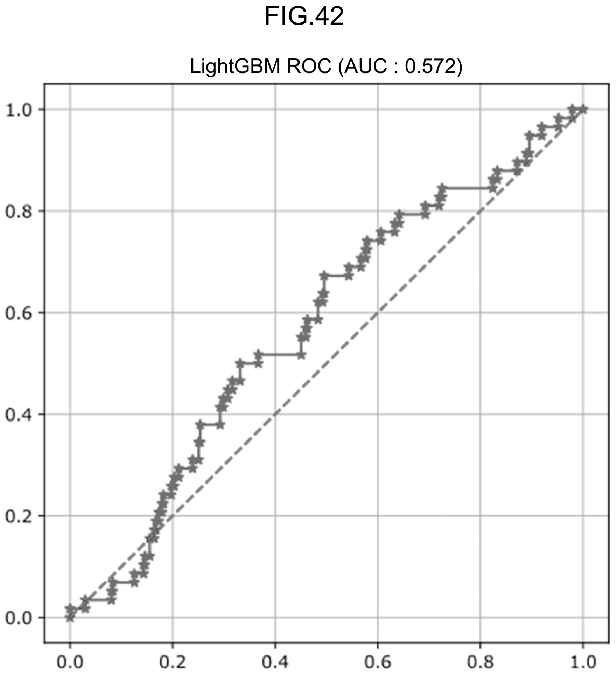

In addition to the information in the previous parity listed above, sensor data for the items listed below were added as explanatory variables to check the accuracy of logistic regression and LightGBM. As the result, the ROC_AUC for logistic regression was 0.558, and the ROC_AUC for LightGBM was 0.572 (see FIGS. 41 and 42).
- Foraging
- Dynamics
- Lying
- Standing
- All rumination time (all_rumination)
- Standing rumination
- Lying rumination
- Milking volume

### Example 9

Using the same data set as in Example 8, excluding 16 items related to milk yield, variables were selected from 40 explanatory variables to prepare a prediction equation.

First, the data from the 442 cases used in Example 8 were divided into training data and verification data so that the proportion of ketosis-occurring individuals was equal. With a sample size ratio of 3:1 for training data and verification data (i.e., 331 cases for training data and 111 cases for verification data), the following ketosis prediction model was constructed.

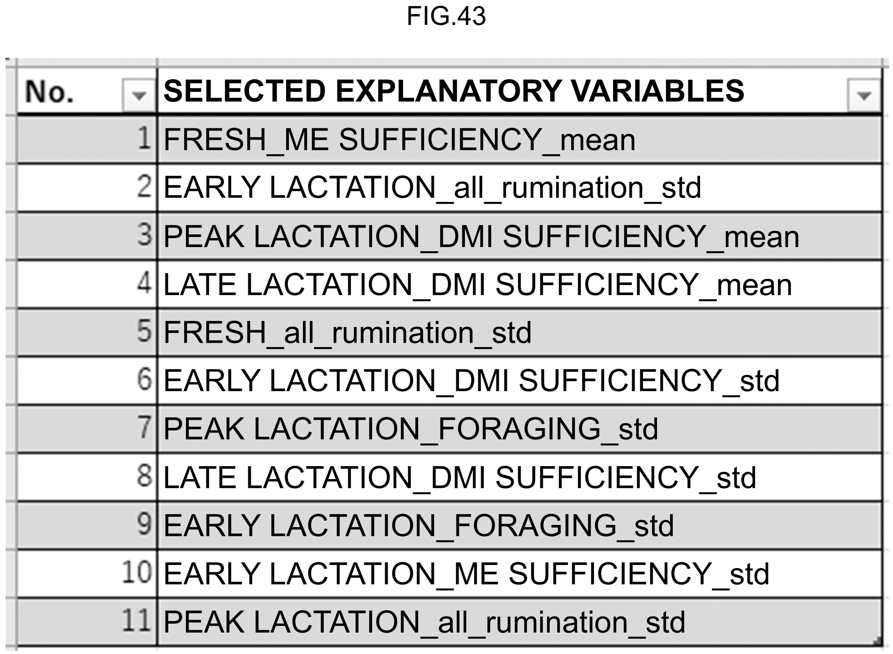

First, logistic regression with L1 regularization (Lasso regression) was performed on the training data to narrow down the explanatory variables. In running the logistic regression with L1 regularization, cross-validation with the training data with 4 random partitions was used to estimate the optimal conditions under which the coefficients of the regularization term minimize the mean squared error of the prediction. Under these conditions, 11 explanatory variables shown in FIG. 43 were selected.

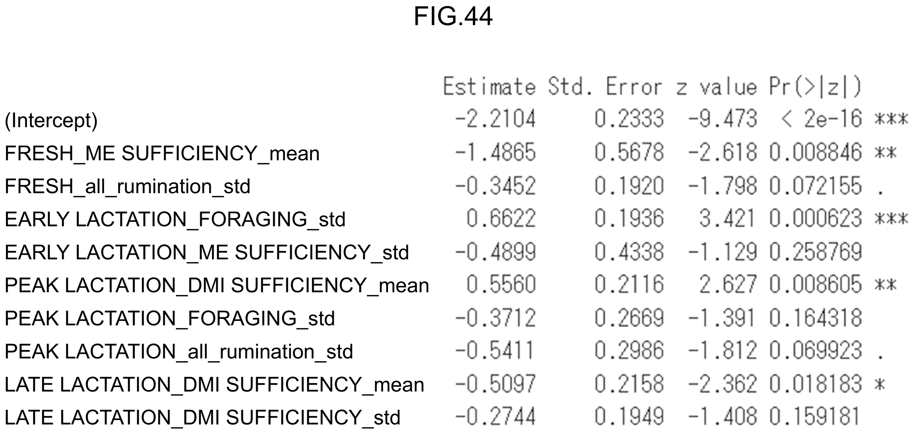

Using logistic regression with the obtained 11 candidate explanatory variables as a full model, a logistic regression model with the minimum AIC was estimated by stepwise variable selection. As a result, nine explanatory variables were selected. The selected explanatory variables are shown in FIG. 44.

A logistic regression model including these nine explanatory variables was estimated using training data, and ROC_AUC was calculated for the presence or absence of development of ketosis by assigning the estimated model to the verification data. As the result, the ROC_AUC for the training data was 0.74 and the ROC_AUC for the verification data was 0.56. These results suggest that it is possible to predict the presence or absence of development of postpartum ketosis even in the absence of milk yield information.

### Example 10

Using the same data set as in Example 8, excluding 16 items related to milk yield, variables were selected from 40 explanatory variables to prepare a prediction equation.

First, the data from the 442 cases used in Example 8 were divided into training data and verification data so that the proportion of ketosis-occurring individuals was equal. With a sample size ratio of 3:1 for training data and verification data (i.e., 331 cases for training data and 111 cases for verification data), the following ketosis prediction model was constructed.

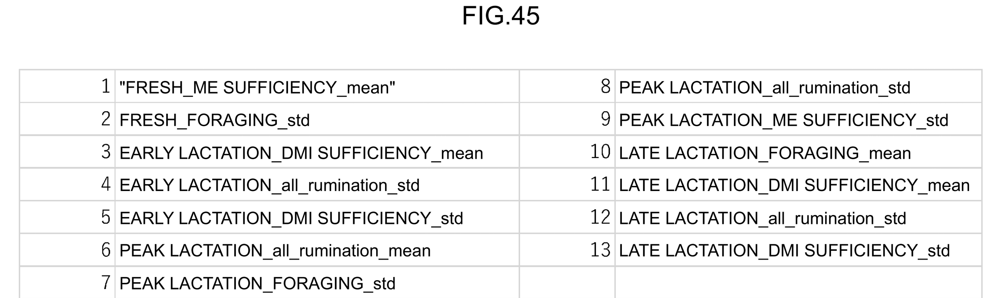

First, the explanatory variables were narrowed down by performing "logistic regression with L1 regularization (Lasso regression)" using the training data. In running the logistic regression with L1 regularization, 100 patterns of explanatory variables were extracted by performing the "operation of narrowing down the explanatory variables by estimating the optimal conditions under which the coefficients of the regularization term minimize the mean squared error of the prediction by cross-validation with the training data with four random partitions" (cross-validation resampling) 100 times. From the 100 resampling results obtained, "explanatory variable selected at least once" was extracted. As a result, 13 explanatory variables shown in FIG. 45 were extracted.

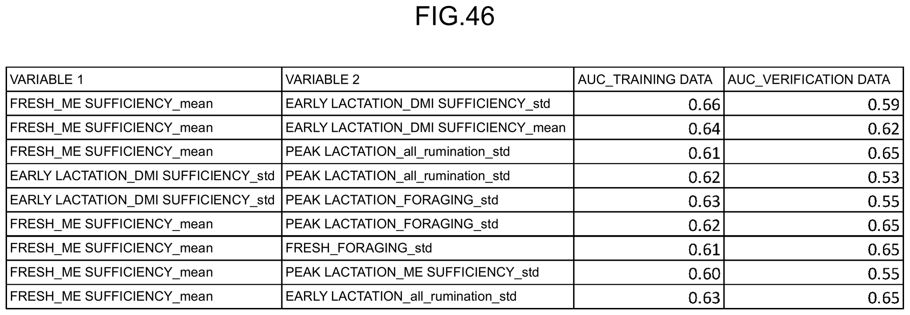

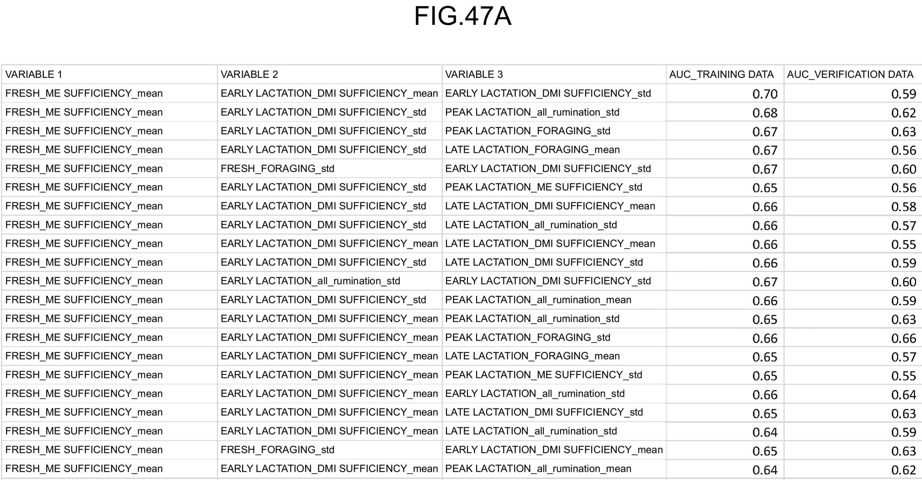

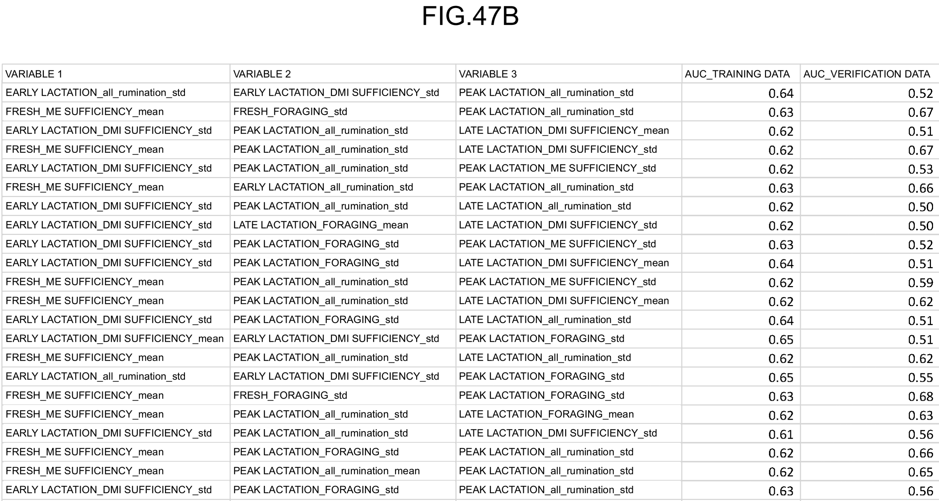

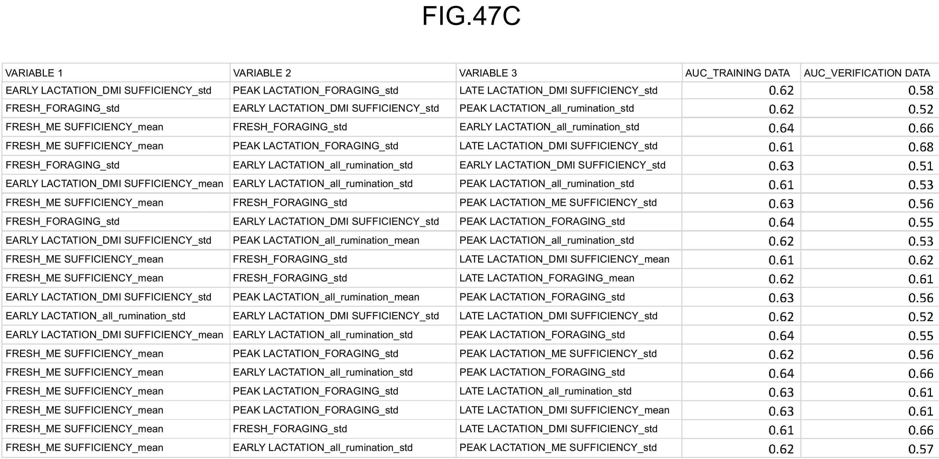

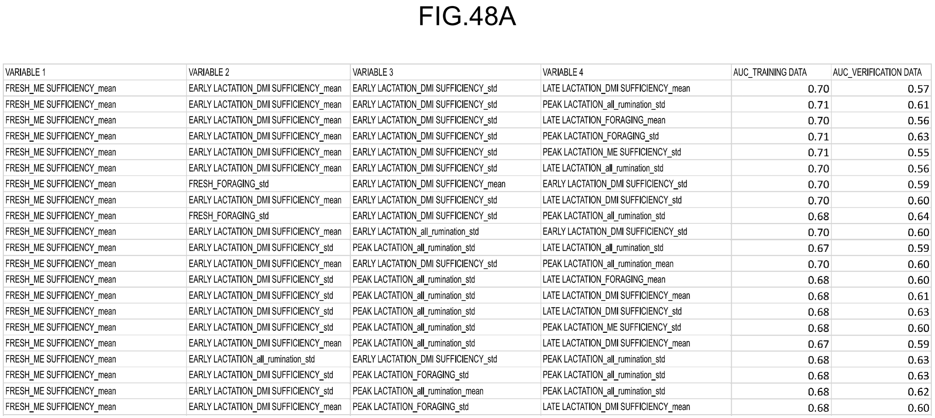

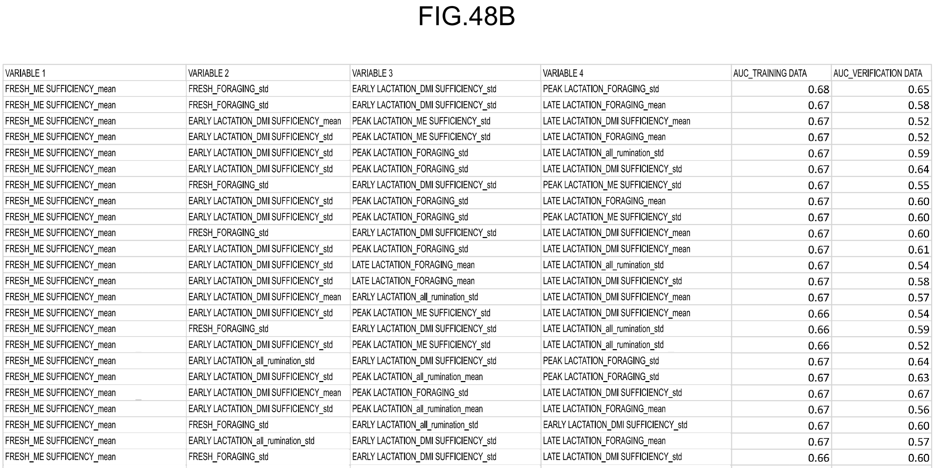

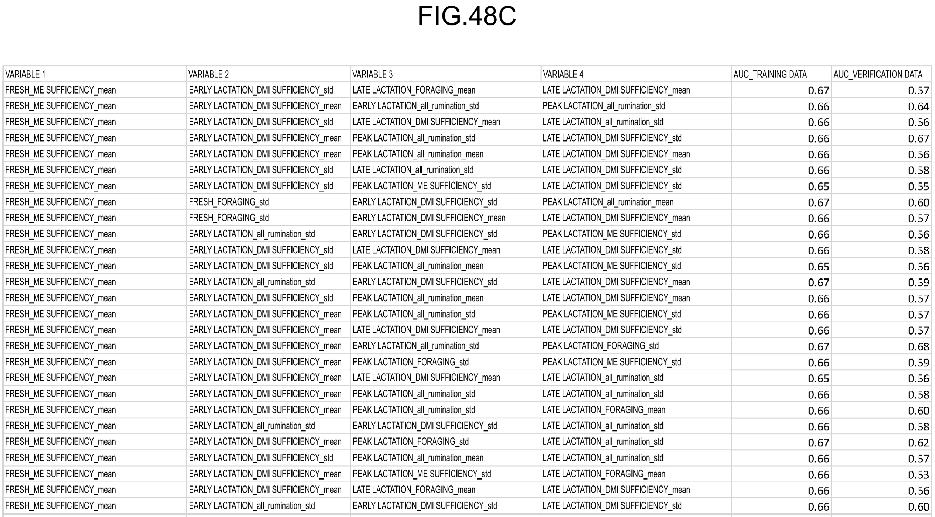

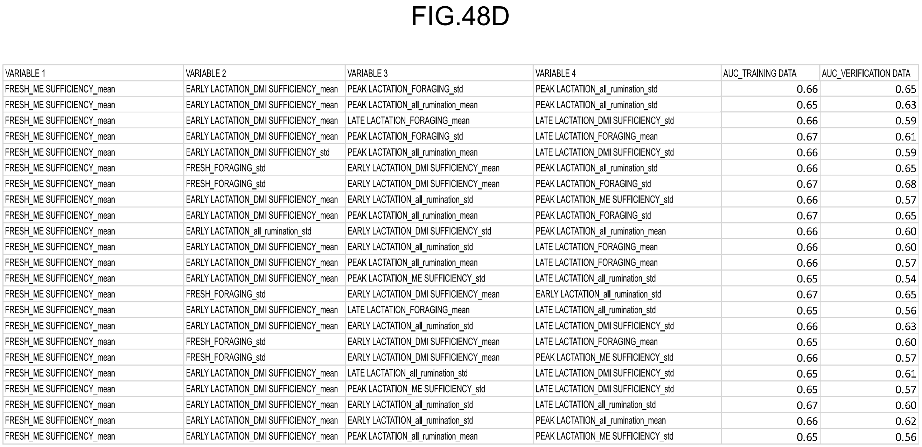

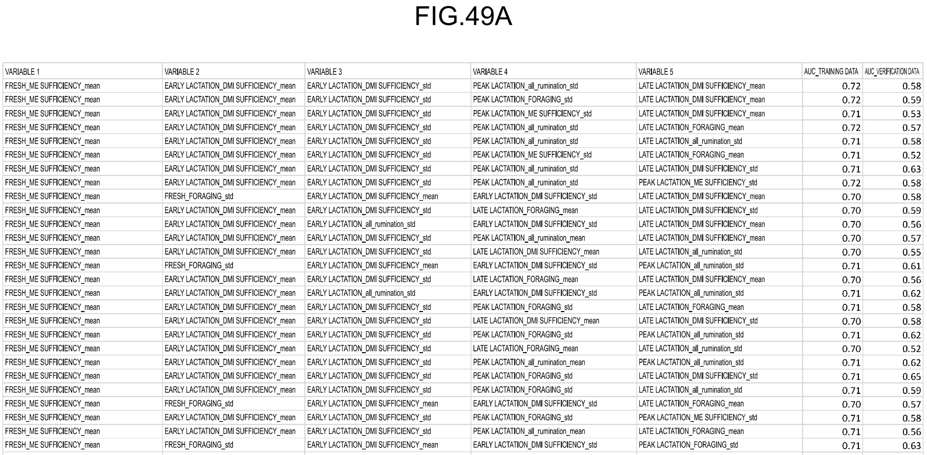

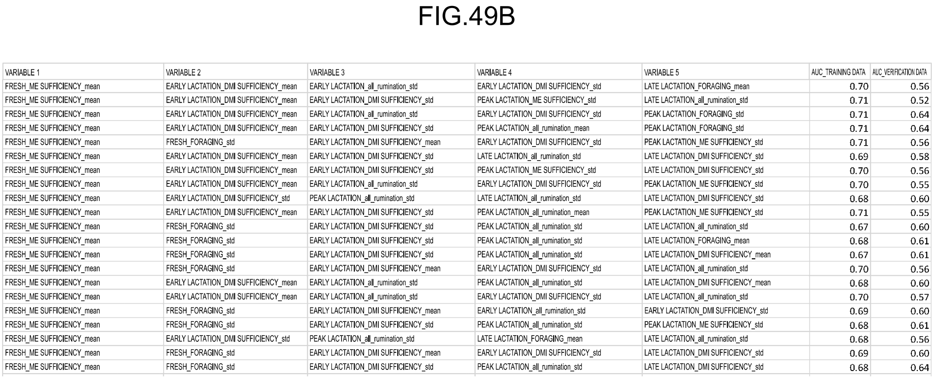

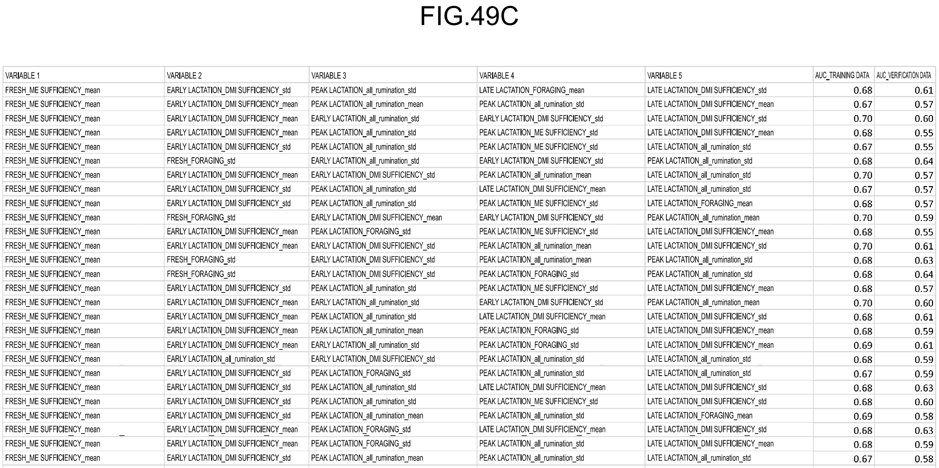

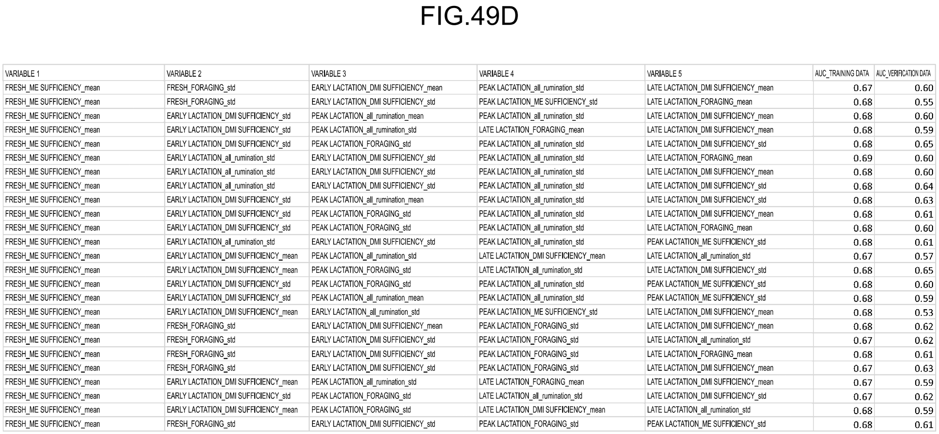

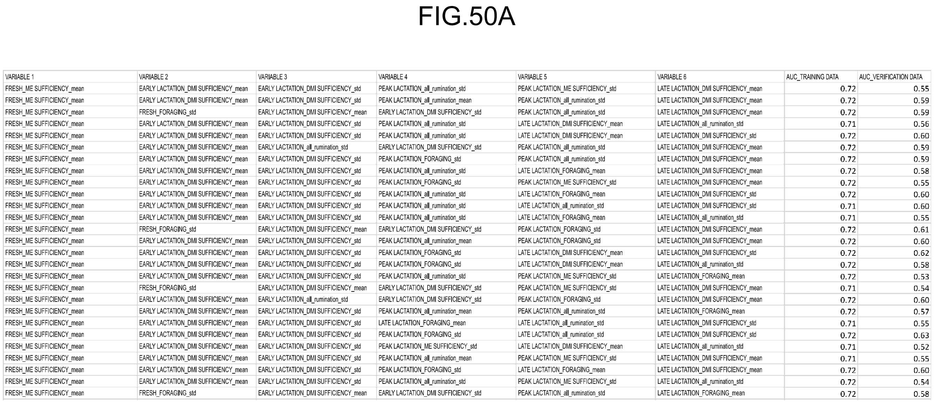

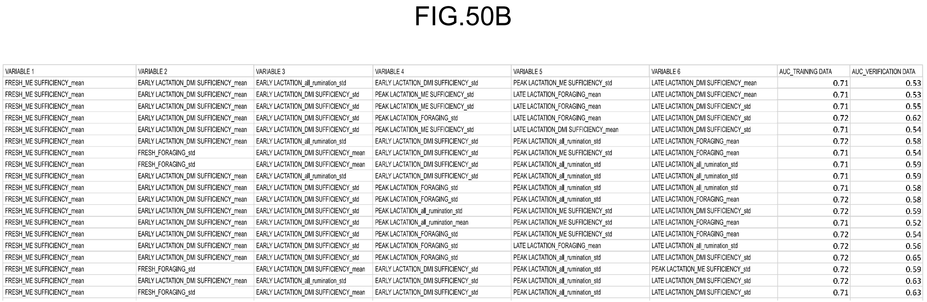

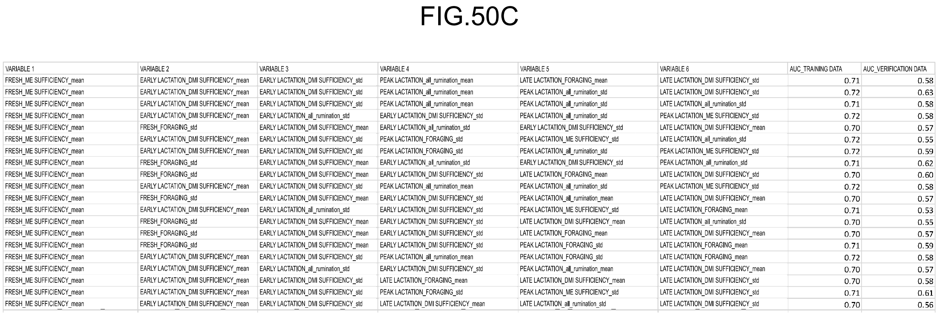

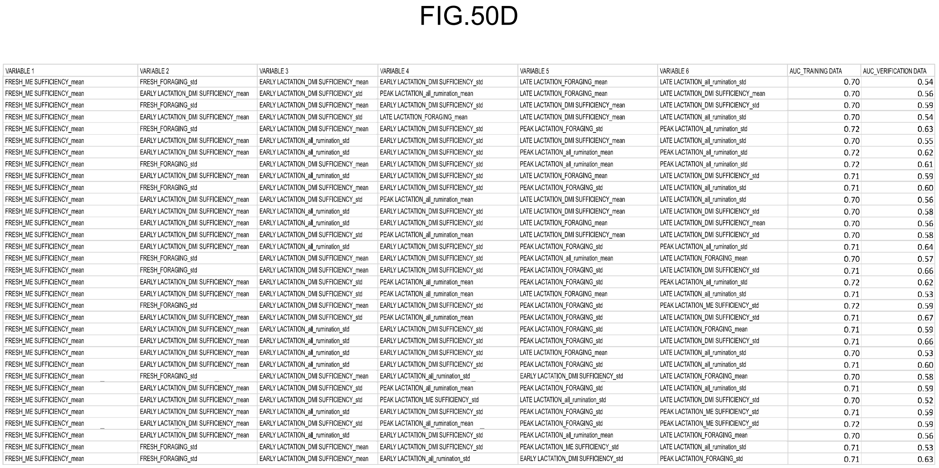

Using the 13 explanatory variables obtained, logistic regression models with 2 to 6 explanatory variables were each extracted by a brute force method, and a top model with the smallest AIC was selected as the best model. Top 20 models were selected for models with two explanatory variables, and top 100 models were selected for models with three to six explanatory variables. As a result, the models with variable combinations shown in FIG. 46 were selected for two-variable models, the models with variable combinations shown in FIGS. 47A, 47B, and 47C were selected for three-variable models, the models with variable combinations shown in FIGS. 48A, 48B, 48C, and 48D were selected for four-variable models, the models with variable combinations shown in FIGS. 49A, 49B, 49C, and 49D were selected for five-variable models, and the models with variable combinations shown in FIGS. 50A, 50B, 50C, and 50D were selected for six-variable models.

A logistic regression model including each combination of the explanatory variables shown in FIGS. 46 to 50D was estimated using the training data, and ROC_AUC was calculated for the presence or absence of development of ketosis by assigning each estimated model to the verification data. For any model with two to six explanatory variables, a plurality of models with a ROC_AUC of 0.55 or higher for the verification data were obtained. These results suggest that it is possible to predict the presence or absence of development of postpartum ketosis even in the absence of milk yield information.

### INDUSTRIAL APPLICABILITY

As discussed above, the present invention is highly valuable in many industrial fields, in particular, dairy farming, development of medicine or feed for cattle, veterinary care for cattle, and the like.

### EXPLANATION OF LETTERS OR NUMERALS

- 100: Evaluating apparatus
- 102: Control device
102a Obtaining part
102b Designating part
102c Formula-preparing part
102d Evaluating part
102d1 Calculating part
102d2 Converting part
102d3 Generating part
102d4 Classifying part
102e Result outputting part
102f Sending part
- 104: Communication interface
- 106: Memory device
106a Non-blood data file
106b BHBA state information file
106c Designated BHBA state information file
106d Formula-related information database
106d1 Formula file
106e Evaluation result file
- 108: Input/output interface

- 112: Input device
- 114: Output device
- 200: Client apparatus (terminal apparatus (information communication terminal apparatus))
- 300: Network
- 400: Database apparatus

## Claims

1. An evaluating method comprising an evaluating step of performing a first evaluation of evaluating a state of a metabolic disease in a cow after present parturition, using a first value in the cow before present parturition, a value of a formula calculated using the first value and the formula including an explanatory variable to be substituted with the first value, or a graph generated based on the first value, the first value being a value on cattle management information obtainable by a non-invasive method.

2. The evaluating method according to claim 1, wherein the first value is at least one of foraging time, rumination time, metabolizable protein sufficiency rate (MP sufficiency rate), metabolizable energy sufficiency rate (ME sufficiency rate), dry matter intake sufficiency rate (DMI sufficiency rate), milking volume, milk yield sufficiency rate, and days since last parturition.

3. The evaluating method according to claim 1, wherein the cow is a dairy cow or a beef cow.

4. The evaluating method according to claim 1, wherein the first value is a value in a predetermined lactation period.

5. The evaluating method according to claim 1, wherein the first value is at least one of a parity number and a total number of milking days of the cow before present parturition.

6. The evaluating method according to claim 1, wherein the first value further has an attribute of at least one of a parity number and a total number of milking days of the cow before present parturition.

7. The evaluating method according to claim 1, wherein the first value is at least one of mean and standard deviation.

8. The evaluating method according to claim 1, wherein in the first evaluation, at least one of whether the cow has the metabolic disease after present parturition, and whether the cow does not have the metabolic disease after present parturition but needs to be examined is evaluated.

9. The evaluating method according to claim 1, wherein the state of the metabolic disease is a state of a metabolic disease at a predetermined time point after present parturition.

10. The evaluating method according to claim 1, wherein the metabolic disease is subclinical ketosis, clinical ketosis, metritis, placental retention, abomasum displacement, milk fever, acidosis, hoof disease, or mastitis.

11. The evaluating method according to claim 2, wherein at the evaluating step, the first evaluation is performed using an image of the graph generated by plotting the days since last parturition on one axis and the milking volume on another axis.

12. The evaluating method according to claim 1, wherein at the evaluating step, a second evaluation of evaluating the state of the metabolic disease in the cow after present parturition is further performed, using a second value or a value of a formula calculated using the second value and the formula including an explanatory variable to be substituted with the second value, the second value being a concentration value of an amino acid in blood of the cow before present parturition.

13. The evaluating method according to claim 12, wherein at the evaluating step, following the second evaluation, a third evaluation of evaluating the state of the metabolic disease in the cow after present parturition is further performed, using a third value, or a value of a formula calculated using the third value and the formula including an explanatory variable to be substituted with the third value, or a graph generated based on the third value, the third value being a value on cattle management information obtainable by a non-invasive method.

14. The evaluating method according to claim 1, further comprising a proposing step of proposing a prophylactic measure for a cow evaluated at the evaluating step as having a high possibility of suffering from the metabolic disease after parturition.

15. The evaluating method according to claim 14, wherein the prophylactic measure is at least one selected from the group consisting of administration of rumen-protected amino acids, administration of a feed additive, administration of a drug, and veterinary diagnosis.

16. The evaluating method according to claim 15, wherein the feed additive is at least one selected from the group consisting of PH adjusters, ion balance adjusters, mycotoxin adsorbents, propionate analogs such as calcium propionate, vitamins, minerals, amino acids, fatty acids, urea, probiotics, yeasts, enzymes, antibiotics, antioxidants, antibacterial agents, and organic acids.

17. The evaluating method according to any one of claims 14 to 16, wherein at the proposing step, statistical causal inference is performed to infer a cause of disease for a cow evaluated as having a possibility of suffering from the metabolic disease, and a prophylactic measure corresponding to the cause is proposed.

18. The evaluating method according to claim 14, wherein the evaluating step and the proposing step are executed in a control unit of an information processing apparatus including the control unit.

19. A calculating method comprising a calculating step of calculating a value of a formula for evaluating a state of a metabolic disease in a cow after present parturition, using a first value in the cow before present parturition and the formula including an explanatory variable to be substituted with the first value, the first value being a value on cattle management information obtainable by a non-invasive method.

20. The calculating method according to claim 19, wherein the calculating step is executed in a control unit of an information processing apparatus including the control unit.

21. An evaluating apparatus comprising a control unit, wherein the control unit includes:
an evaluating unit that performs a first evaluation of evaluating a state of a metabolic disease in a cow after present parturition, using a first value in the cow before present parturition, a value of a formula calculated using the first value and the formula including an explanatory variable to be substituted with the first value, or a graph generated based on the first value, the first value being a value on cattle management information obtainable by a non-invasive method.

22. The evaluating apparatus according to claim 21, wherein
the evaluating apparatus is communicably connected via a network to a terminal apparatus that provides the first value, the value of the formula, or the graph,
the control unit further includes:
a data receiving unit that receives the first value, the value of the formula, or the graph transmitted from the terminal apparatus; and
a result sending unit that transmits an evaluation result obtained by the evaluating unit to the terminal apparatus, and
the evaluating unit uses the first value, the value of the formula, or the graph received by the data receiving unit.

23. A calculating apparatus comprising a control unit, wherein the control unit includes:
a calculating unit that calculates a value of a formula for evaluating a state of a metabolic disease in a cow after present parturition, using a first value in the cow before present parturition and the formula including an explanatory variable to be substituted with the first value, the first value being a value on cattle management information obtainable by a non-invasive method.

24. An evaluating program including programmed instructions for causing an information processing apparatus including a control unit to execute an evaluating method,
the evaluating method comprising:
an evaluating step of performing a first evaluation of evaluating a state of a metabolic disease in a cow after present parturition, using a first value in the cow before present parturition, a value of a formula calculated using the first value and the formula including an explanatory variable to be substituted with the first value, or a graph generated based on the first value, the first value being a value on cattle management information obtainable by a non-invasive method.

25. A calculating program including programmed instructions for causing an information processing apparatus including a control unit to execute a calculating method,
the calculating method comprising:
a calculating step of calculating a value of a formula for evaluating a state of a metabolic disease in a cow after present parturition, using a first value in the cow before present parturition and the formula including an explanatory variable to be substituted with the first value, the first value being a value on cattle management information obtainable by a non-invasive method.

26. A computer-readable recording medium that stores the program according to claim 24 or 25.

27. An evaluating system comprising an evaluating apparatus including a control unit and a terminal apparatus including a control unit that are connected to each other communicatively via a network, wherein
the control unit of the terminal apparatus includes:
a data sending unit that transmits, to the evaluating apparatus, a first value in a cow before present parturition, a value of a formula calculated using the first value and the formula including an explanatory variable to be substituted with the first value, or a graph generated based on the first value, the first value being a value on cattle management information obtainable by a non-invasive method; and
a result receiving unit that receives an evaluation result on a state of a metabolic disease in the cow after present parturition transmitted from the evaluating apparatus, and
the control unit of the evaluating apparatus includes:
a data receiving unit that receives the first value, the value of the formula, or the graph transmitted from the terminal apparatus;
an evaluating unit that evaluates the state of the metabolic disease in the cow after present parturition, using the first value, the value of the formula, or the graph received by the data receiving unit; and
a result sending unit that transmits the evaluation result obtained by the evaluating unit to the terminal apparatus.

28. A terminal apparatus comprising a control unit, wherein the control unit includes:
a result obtaining unit that obtains an evaluation result on a state of a metabolic disease in a cow after present parturition,
wherein the evaluation result is a result of evaluating the state of the metabolic disease in the cow after present parturition, using a first value in the cow before present parturition, a value of a formula calculated using the first value and the formula including an explanatory variable to be substituted with the first value, or a graph generated based on the first value, the first value being a value on cattle management information obtainable by a non-invasive method.

29. The terminal apparatus according to claim 28, wherein
the terminal apparatus is communicatively connected via a network to an evaluating apparatus that performs the evaluation, and
the result obtaining unit receives the result transmitted from the evaluating apparatus.

30. A formula generating method comprising a formula generating step of:
obtaining a first value in a cow before present parturition, the first value being a value on cattle management information obtainable by a non-invasive method;
obtaining a state of a metabolic disease in the cow after present parturition; and
generating a formula for evaluating, before present parturition, the state of the metabolic disease in the cow after present parturition, by a predetermined analytical method, using the obtained first value and the obtained state of the metabolic disease in the cow after present parturition as training data.

31. The formula generating method according to claim 30, wherein the first value is at least one of foraging time, rumination time, metabolizable protein sufficiency rate (MP sufficiency rate), metabolizable energy sufficiency rate (ME sufficiency rate), dry matter intake sufficiency rate (DMI sufficiency rate), milking volume, milk yield sufficiency rate, and days since last parturition.

32. The formula generating method according to claim 30, wherein the cow is a dairy cow or a beef cow.

33. The formula generating method according to claim 30, wherein the first value is a value in a predetermined lactation period.

34. The formula generating method according to claim 30, wherein the first value is at least one of a parity number and a total number of milking days of the cow before present parturition.

35. The formula generating method according to claim 30, wherein the first value further has an attribute of at least one of a parity number and a total number of milking days of the cow before present parturition.

36. The formula generating method according to claim 30, wherein the first value is at least one of mean and standard deviation.

37. The formula generating method according to claim 30, wherein the state of the metabolic disease in the cow after present parturition is whether the cow has the metabolic disease after present parturition, or whether the cow does not have the metabolic disease after present parturition but needs to be examined.

38. The formula generating method according to claim 30, wherein the state of the metabolic disease is a state of a metabolic disease at a predetermined time point after present parturition.

39. The formula generating method according to claim 30, wherein the metabolic disease is subclinical ketosis, clinical ketosis, metritis, placental retention, abomasum displacement, milk fever, acidosis, hoof disease, or mastitis.

40. The formula generating method according to any one of claims 30 to 39, wherein the predetermined analytical method is at least one analytical method selected from the group consisting of decision trees, random forests, neural networks, and logistic regression.
